# EUROPEAN PATENT APPLICATION

(11) **EP 4 546 882 A1**
(43) Date of publication of application: **30.04.2025**
(21) Application number: 23826995.5
(22) Date of filing: 08.06.2023
(51) Int. Cl.: H04W 52/02, H04W 16/26, H04W 74/02

(54) **WIRELESS CONTROL DEVICE, WIRELESS CONTROL METHOD, AND PROGRAM**

(30) Priority: 24.06.2022 JP 2022102098
(71) Applicant: Sony Group Corporation, Tokyo 108-0075 (JP)
(72) Inventor: TANAKA Yusuke, Tokyo 108-0075 (JP)
(74) Representative: D Young & Co LLP
(86) International application number: PCT/JP2023/021291
(87) International publication number: WO 2023/248808

(57) **Abstract**

The present technology relates to a wireless control device, a wireless control method, and a program that enable appropriate processing according to a schedule designated by a wireless communication device in a case of performing wireless communication with the wireless communication device via a relay device.

A control unit controls wireless communication with a wireless communication device via a relay device, controls reception of schedule information indicating a schedule designated by the wireless communication device and adjustment information used for adjustment of the schedule, and executes schedule processing on the basis of the schedule information and the adjustment information. The present technology can be applied to, for example, a wireless control device or the like included in a wireless terminal device of a wireless communication system including a wireless communication device, a relay device, and a wireless terminal device.

## Description

### TECHNICAL FIELD

The present technology relates to a wireless control device, a wireless control method, and a program, and more particularly, to a wireless control device, a wireless control method, and a program capable of appropriately performing processing according to a schedule designated by a wireless communication device in a case of performing wireless communication with the wireless communication device via a relay device.

### BACKGROUND ART

In a wireless network, it is known to install a plurality of access points (APs) for the purpose of extending a communication range and improving a throughput by an AP cooperation technology such as joint transmission (JT).

The AP is connected to a wide area network (WAN) or the like by wire and has a series of communication functions, but is expensive. On the other hand, a remote radio head (RRH) has a limited function of referring to data in a frame used for wireless communication, but is inexpensive.

Therefore, in a case where the plurality of APs are installed in the wireless network, by substituting some of the APs with the RRHs, it is possible to reduce the device cost, install the APs in a place where wired connection is impossible, and reduce the delay by skipping some processes related to wireless communication.

Meanwhile, installation of an RRH in a cellular system has also been devised (for example, Patent Document 1). In the invention described in Patent Document 1, since an evolved node B (eNB), which is a base station, and an RRH are connected by a high-speed wire such as a fiber cable or an X2 backhaul, a difference in timing between a signal directly transmitted from the eNB and a signal transmitted via the RRH is small.

### CITATION LIST

### PATENT DOCUMENT

Patent Document 1: Japanese Translation of PCT International Application Publication No. 2014-508464

### SUMMARY OF THE INVENTION

### PROBLEMS TO BE SOLVED BY THE INVENTION

In a wireless network in which some APs are substituted by RRHs, the RRHs operate as part of the APs. Therefore, it is assumed that each of the RRHs transfers a Beacon signal, which is a signal in a format of a Beacon frame transmitted by the AP, to a wireless terminal device or transmits a signal similar to the Beacon signal to the wireless terminal device.

However, in a case where the RRH transfers the Beacon signal transmitted by the AP, transmission timings of the Beacon signals of the AP and the RRH are different. Therefore, it is difficult for the wireless terminal device connected only to the RRH to appropriately perform processing according to a schedule starting from a reception timing or the like of the Beacon signal transmitted by the AP.

On the other hand, in a case where the RRH transmits a signal similar to the Beacon signal transmitted by the AP at the same timing as the AP, due to duplication of the transmitted signals, the wireless terminal device connected to both the AP and the RRH may not be able to accurately receive the signals.

Therefore, in a case of performing wireless communication with a wireless communication device such as an AP via a relay device such as an RRH, it is difficult for the wireless terminal device to appropriately perform processing according to a schedule designated by the wireless communication device. Therefore, there is a demand for providing a method capable of realizing such ingenuity, but such a demand is not sufficiently met.

The present technology has been made in view of such a situation, and makes it possible to appropriately perform processing according to a schedule designated by a wireless communication device in a case where wireless communication is performed with the wireless communication device via a relay device.

### SOLUTIONS TO PROBLEMS

A wireless control device or a program according to one aspect of the present technology is a wireless control device or an information processing device including a control unit that controls wireless communication with a wireless communication device via a relay device, the control unit controlling reception of schedule information indicating a schedule designated by the wireless communication device and adjustment information used for adjustment of the schedule, and executing schedule processing on the basis of the schedule information and the adjustment information, or a program for causing a computer to function as the wireless control device or the information processing device.

A wireless control method according to one aspect of the present technology is a wireless control method including a control step of, by a wireless control device, controlling wireless communication with a wireless communication device via a relay device, the control step including controlling reception of schedule information indicating a schedule designated by the wireless communication device and adjustment information used for adjustment of the schedule, and executing schedule processing on the basis of the schedule information and the adjustment information.

In one aspect of the present technology, wireless communication with the wireless communication device via the relay device is controlled. Specifically, reception of schedule information indicating a schedule designated by the wireless communication device and adjustment information used for adjustment of the schedule is controlled, and the schedule processing is executed on the basis of the schedule information and the adjustment information.

### BRIEF DESCRIPTION OF DRAWINGS

Fig. 1 is a diagram illustrating a configuration example of an embodiment of a wireless communication system including a wireless control device to which the present technology is applied.
Fig. 2 is a block diagram illustrating a configuration example of a wireless communication device.
Fig. 3 is a block diagram illustrating a configuration example of a relay device.
Fig. 4 is a block diagram illustrating a configuration example of a wireless terminal device.
Fig. 5 is a flowchart illustrating connection establishment processing in a case where the relay device is an RRH.
Fig. 6 is a diagram illustrating a format example of a frame of an RRH connection request signal and an RRH connection availability notification signal.
Fig. 7 is a diagram illustrating a format example of an RRH Action field value of the RRH connection request signal.
Fig. 8 is a diagram illustrating an example of a format of an RRH Action field of the RRH connection availability notification signal.
Fig. 9 is a diagram illustrating connection establishment processing in a case where the relay device is an AP that functions as an RRH.
Fig. 10 is a diagram illustrating an example of a frame format of an RRH function correspondence notification signal.
Fig. 11 is a flowchart explaining schedule processing in a case where a start timing of a schedule is adjusted.
Fig. 12 is a flowchart explaining schedule processing in a case where a schedule period is adjusted.
Fig. 13 is a flowchart explaining TWT processing.
Fig. 14 is a diagram illustrating an example of a frame format of a Beacon signal including TWT information and adjustment information.
Fig. 15 is a flowchart explaining CFP processing.
Fig. 16 is a diagram illustrating another example of the frame format of the RRH function correspondence notification signal.
Fig. 17 is a diagram illustrating an example of a UI.
Fig. 18 is a block diagram illustrating a configuration example of hardware of a computer.
Fig. 19 is a block diagram illustrating a schematic configuration example of a smartphone to which the present technology is applied.
Fig. 20 is a block diagram illustrating an example of a schematic configuration of a vehicle-mounted device to which the present technology is applied.
Fig. 21 is a block diagram illustrating an example of a schematic configuration of a wireless AP to which the present technology is applied.

### MODE FOR CARRYING OUT THE INVENTION

In the description below, modes for carrying out the present technology (these modes will be hereinafter referred to as embodiments) are described. Note that the description will be made in the following order.
1. One embodiment
2. Configuration example of computer
3. Configuration example of smartphone
4. Configuration example of vehicle-mounted device
5. Configuration example of wireless AP

### <One embodiment>

### <Configuration example of wireless communication system>

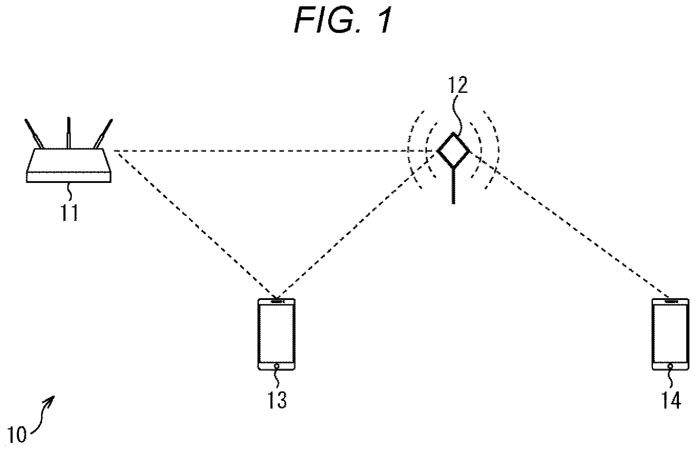

Fig. 1 is a diagram illustrating a configuration example of an embodiment of a wireless communication system including a wireless control device to which the present technology is applied.

A wireless communication system 10 of Fig. 1 includes a wireless communication device 11, a relay device 12, and two wireless terminal devices 13 and 14.

The wireless communication device 11 is an AP that functions as a base station. The wireless communication device 11 is connected to a WAN or the like by wire and has a series of communication functions. The wireless communication device 11 is connected to the relay device 12 as indicated by a dotted line in Fig. 1 and performs cooperative operation. The relay device 12 is an RRH or an AP that functions as an RRH. In the wireless communication by the relay device 12, a referring function of data in a frame used for the wireless communication is limited.

The wireless terminal device 13 is a station (STA) connected to both the wireless communication device 11 and the relay device 12 as indicated by a dotted line in Fig. 1. The wireless terminal device 13 performs wireless communication with both the wireless communication device 11 and the relay device 12. The wireless terminal device 14 is a station connected to the relay device 12 as indicated by a dotted line in Fig. 1. The wireless terminal device 14 includes a wireless control device that performs wireless communication with the relay device 12.

Note that, in the following description, the communication performed between the wireless communication device 11 and the relay device 12 is assumed to be wireless communication, but may be wired communication. In the example of Fig. 1, the number of stations connected to the wireless communication device 11 or the relay device 12 is two, but the number is not limited thereto. The number of the relay devices 12 is not limited to one. For example, the wireless communication system 10 may include two relay devices 12 connected to each other, and the wireless communication device 11 may be connected to the wireless terminal device 13 and the wireless terminal device 14 via the two relay devices 12. In this case, the wireless terminal device 13 may not be connected to the wireless communication device 11.

### <Configuration example of wireless communication device>

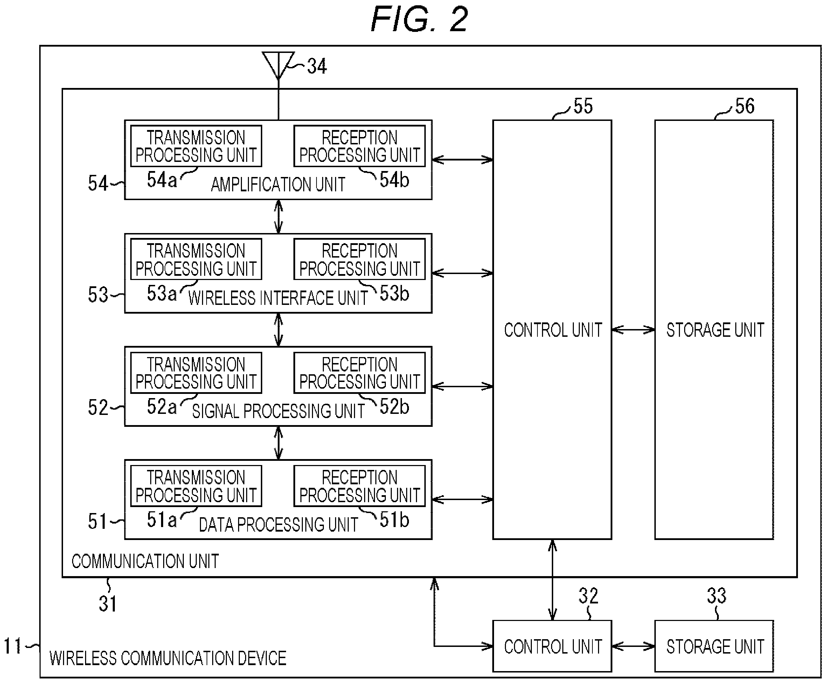

Fig. 2 is a block diagram illustrating a configuration example of the wireless communication device 11 of Fig. 1.

The wireless communication device 11 of Fig. 2 includes a communication unit 31, a control unit 32, a storage unit 33, and an antenna 34.

The communication unit 31 includes a data processing unit 51, a signal processing unit 52, a wireless interface unit 53, an amplification unit 54, a control unit 55, and a storage unit 56. The communication unit 31 can be realized by, for example, one or more large scale integrations (LSIs).

The data processing unit 51 includes a transmission processing unit 51a and a reception processing unit 51b. The transmission processing unit 51a manages a transmission sequence of transmission data and transmission information supplied from the control unit 55.

The transmission information in the wireless communication device 11 is control information, management information, or the like to be notified to the relay device 12 or the wireless terminal device 13 or 14. As the transmission information, for example, there is schedule information indicating a schedule designated by the wireless communication device 11. The schedule information is, for example, information representing at least one of a start timing and a period of the schedule with a time point at which the wireless terminal device 13 or 14 receives the schedule information as a starting point. Note that the schedule information may not be information indicating at least one of the start timing and the period of the schedule as long as the schedule information includes information regarding at least one of the start timing and the period of the schedule.

The transmission processing unit 51a generates data in units of frames corresponding to the transmission data and the transmission information at a timing according to a managed sequence, and supplies the data to the signal processing unit 52.

Specifically, the transmission processing unit 51a generates a data unit by performing encryption processing or the like on the transmission data and the transmission information at a timing according to the managed sequence. The transmission processing unit 51a adds a media access control (MAC) header and an error detection code to the data unit and performs processing of connecting a plurality of the data units after the addition to generate data in units of frames. The transmission processing unit 51a performs a channel access operation based on carrier sense via the signal processing unit 52, the wireless interface unit 53, and the amplification unit 54. After the channel access operation, the transmission processing unit 51a supplies the generated data in units of frames to the signal processing unit 52.

The reception processing unit 51b acquires the data in units of frames supplied from the signal processing unit 52. The reception processing unit 51b releases the connection of the data units included in the data in units of frames. The reception processing unit 51b performs cancellation, analysis, and error detection of the added MAC header for each data unit obtained as a result. The reception processing unit 51b requests retransmission of a predetermined data unit via the signal processing unit 52, the wireless interface unit 53, and the amplification unit 54 as necessary. The reception processing unit 51b performs cancellation, analysis, and error detection of the MAC header for the data unit retransmitted in response to the request. The reception processing unit 51b performs decryption processing and reorder processing on each data unit after the error detection. The reception processing unit 51b supplies the reception information or the reception data obtained as a result to the control unit 55.

The reception information in the wireless communication device 11 is control information, management information, or the like transmitted from the relay device 12 or the wireless terminal device 13 or 14. The reception information includes, for example, adjustment information used for adjustment of at least one of the start timing and the period of the schedule. Here, the adjustment information is information representing, as a gap, a difference between a timing at which the relay device 12 receives the Beacon signal including the schedule information from the wireless communication device 11 and a timing at which the wireless terminal device 13 or 14 receives the Beacon signal via the relay device 12. It can also be said that this gap is a difference between a timing at which the wireless communication device 11 transmits the Beacon signal including the schedule information and a timing at which the relay device 12 transmits the Beacon signal according to the Beacon signal.

The signal processing unit 52 includes a transmission processing unit 52a and a reception processing unit 52b. The transmission processing unit 52a generates a symbol stream by adding a physical header to a frame generated by performing encoding, interleaving, modulation, and the like on the data in units of frames supplied from the transmission processing unit 51a. The transmission processing unit 52a supplies the symbol stream to the wireless interface unit 53.

The reception processing unit 52b analyzes the physical header in the symbol stream supplied from the wireless interface unit 53, and generates data in units of frames by performing demodulation, deinterleaving, decoding, and the like on the frame. The reception processing unit 52b also performs complex channel characteristic estimation and spatial separation processing as necessary. The reception processing unit 52b supplies the generated data in units of frames to the reception processing unit 51b.

The wireless interface unit 53 includes a transmission processing unit 53a and a reception processing unit 53b. The transmission processing unit 53a performs digital-analog signal conversion, filtering, up-conversion, and phase control on the symbol stream supplied from the transmission processing unit 52a, and generates a transmission signal that is an analog signal. The transmission processing unit 53a supplies the transmission signal to the amplification unit 54.

The reception processing unit 53b performs downconversion, filtering, and analog-digital signal conversion on a reception signal supplied from the amplification unit 54 to generate a symbol stream that is a digital signal. The reception processing unit 53b supplies the symbol stream to the reception processing unit 52b.

The amplification unit 54 includes a transmission processing unit 54a and a reception processing unit 54b, and is connected to the antenna 34. The transmission processing unit 54a amplifies the transmission signal supplied from the transmission processing unit 53a. The amplification unit 54 transmits the amplified transmission signal to at least one of the relay device 12 and the wireless terminal device 13 connected to the wireless communication device 11 via the antenna 34.

The reception processing unit 54b amplifies the reception signal transmitted from the relay device 12 or the wireless terminal device 13 and received by the antenna 34, and supplies the amplified reception signal to the reception processing unit 53b. Note that some of the configuration elements of the amplification unit 54 may be provided outside the communication unit 31 or may be provided in the wireless interface unit 53.

The control unit 55 controls operation of each unit including exchange of information between each unit of the communication unit 31 while referring to the storage unit 56 as necessary, thereby controlling wireless communication with the relay device 12 and the wireless terminal device 13 existing in a communication range of the wireless communication device 11.

Specifically, the control unit 55 generates transmission information and supplies the transmission information to the transmission processing unit 51a, and controls the transmission processing units 51a to 54a to transmit a transmission signal of the transmission information from the antenna 34. The control unit 55 reads the transmission data stored in the storage unit 56, supplies the transmission data to the transmission processing unit 51a, and controls the transmission processing units 51a to 54a to transmit a transmission signal of the transmission data from the antenna 34.

The control unit 55 acquires the reception information and the reception data corresponding to a reception signal received by the antenna 34 by controlling the reception processing units 51b to 54b. The control unit 55 controls the operation of each unit of the communication unit 31 on the basis of the reception information. The control unit 55 supplies the acquired reception data to the storage unit 56 and stores the data therein.

The control unit 55 controls the wireless communication with the relay device 12 and the wireless terminal device 13 as described above, and performs various processing using the wireless communication. For example, the control unit 55 establishes connection with the relay device 12 and the wireless terminal device 13. The control unit 55 controls transmission of the schedule information and reception of the adjustment information.

The storage unit 56 stores information, transmission data, reception data, and the like used for control by the control unit 55.

The control unit 32 controls the entire communication unit 31 and the control unit 55. Note that the control unit 32 may perform a part of the control performed by the control unit 55 instead. The control unit 32 and the control unit 55 may be integrated into one control unit.

The storage unit 33 stores information used for control by the control unit 32 and the control unit 55. The storage unit 33 may store some information or the like stored in the storage unit 56 instead. The storage unit 33 and the storage unit 56 may be integrated into one storage unit.

Note that, in the example of Fig. 2, the wireless communication device 11 includes one wireless signal processing unit including the antenna 34, the wireless interface unit 53, and the amplification unit 54, but may include a plurality of the wireless signal processing units. The wireless communication device 11 may include a plurality of processing units including the data processing unit 51 and the signal processing unit 52, and the plurality of processing units may be connected to one wireless interface unit 53. In a case where the wireless communication device 11 is a configuration element of a plurality of the wireless communication systems 10, all or some of the configuration elements of the communication unit 31 may be included for each wireless communication system 10. In this case, all or some of the configuration elements of the communication unit 31 exist as many as the number of wireless communication systems 10 including the wireless communication devices 11.

### <Configuration example of relay device>

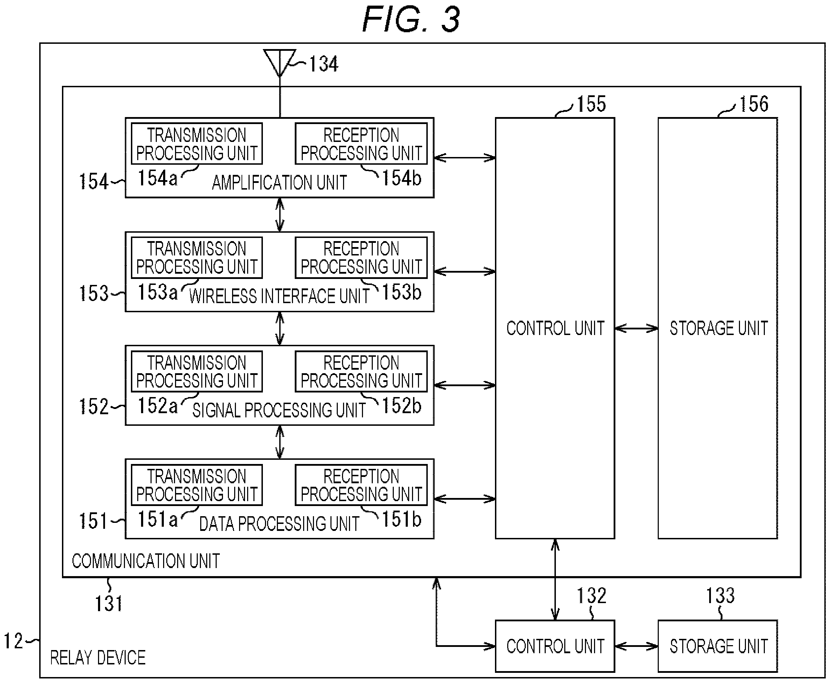

Fig. 3 is a block diagram illustrating a configuration example of the relay device 12 of Fig. 1.

The relay device 12 of Fig. 3 includes a communication unit 131, a control unit 132, a storage unit 133, and an antenna 134.

The communication unit 131 includes a data processing unit 151, a signal processing unit 152, a wireless interface unit 153, an amplification unit 154, a control unit 155, and a storage unit 156. The communication unit 131 can be realized by, for example, one or more LSIs.

The data processing unit 151 includes a transmission processing unit 151a and a reception processing unit 151b. The transmission processing unit 151a performs sequence management of transmission of transmission data, transmission information, and a data unit supplied from the control unit 155. The transmission information in the relay device 12 is control information, management information, or the like to be notified to the wireless communication device 11 or the wireless terminal device 13 or 14. The transmission information includes adjustment information and the like.

The transmission processing unit 151a generates data in units of frames corresponding to the transmission data, the transmission information, and the data unit according to the managed sequence, and supplies the data to the signal processing unit 152.

Specifically, the transmission processing unit 151a generates a data unit by performing encryption processing or the like on the transmission data and the transmission information at a timing according to the managed sequence. The transmission processing unit 151a adds a MAC header and an error detection code to the generated data unit and a data unit supplied from the control unit 155, and performs processing of connecting a plurality of the data units after the addition, thereby generating data in units of frames. The transmission processing unit 151a performs a channel access operation based on carrier sense via the signal processing unit 152, the wireless interface unit 153, and the amplification unit 154. After the channel access operation, the transmission processing unit 151a supplies the generated data in units of frames to the signal processing unit 152.

The reception processing unit 151b acquires the data in units of frames supplied from the signal processing unit 152. The reception processing unit 151b releases the connection of the data units included in the data in units of frames. The reception processing unit 151b performs cancellation, analysis, and error detection of the added MAC header for each data unit obtained as a result. The reception processing unit 151b requests retransmission of a predetermined data unit via the signal processing unit 152, the wireless interface unit 153, and the amplification unit 154 as necessary. The reception processing unit 151b performs cancellation, analysis, and error detection of the MAC header for the data unit retransmitted in response to the request.

Here, unlike the reception processing unit 51b, the reception processing unit 151b has a limited reference function of data in a frame. Therefore, for example, the reception processing unit 151b does not perform the decryption processing and the reorder processing on each data unit after the error detection. Note that the limited function may be processing other than the decryption processing and the reorder processing.

In a case where the relay device 12 is an RRH, the limitation of the reference function is realized by the relay device 12 not including the reference function. On the other hand, in a case where the relay device 12 is an AP having an RRH function, the relay device 12 has a reference function. However, when an operation as an RRH is demanded, the reference function is turned off to realize the limitation of the reference function.

The reception processing unit 151b supplies the data unit from which the MAC header has been canceled to the control unit 155. Examples of the data unit include a data unit of the schedule information.

The signal processing unit 152 includes a transmission processing unit 152a and a reception processing unit 152b. Similarly to the transmission processing unit 52a in Fig. 2, the transmission processing unit 152a generates a symbol stream from the data in units of frames supplied from the transmission processing unit 151a and supplies the symbol stream to the wireless interface unit 153. Similarly to the reception processing unit 52b in Fig. 2, the reception processing unit 152b generates data in units of frames from the symbol stream supplied from the wireless interface unit 153 and supplies the data to the reception processing unit 151b.

The wireless interface unit 153 includes a transmission processing unit 153a and a reception processing unit 153b. Similarly to the transmission processing unit 53a in Fig. 2, the transmission processing unit 153a generates a transmission signal from the symbol stream supplied from the transmission processing unit 152a and supplies the transmission signal to the amplification unit 154. Similarly to the reception processing unit 53b in Fig. 2, the reception processing unit 153b generates a symbol stream from the reception signal supplied from the amplification unit 154 and supplies the symbol stream to the reception processing unit 152b.

The amplification unit 154 includes a transmission processing unit 154a and a reception processing unit 154b, and is connected to the antenna 134. The transmission processing unit 154a amplifies the transmission signal supplied from the transmission processing unit 153a. The amplification unit 154 transmits the amplified transmission signal to at least one of the wireless communication device 11 and the wireless terminal devices 13 and 14 connected to the relay device 12 via the antenna 34.

The reception processing unit 154b amplifies the reception signal transmitted from the wireless communication device 11 or the wireless terminal device 13 or 14 and received by the antenna 134, and supplies the amplified reception signal to the reception processing unit 153b. Note that some of the configuration elements of the amplification unit 154 may be provided outside the communication unit 131 or may be provided in the wireless interface unit 153.

The control unit 155 controls the operation of each unit of the communication unit 131 while referring to the storage unit 156 as necessary, thereby controlling the wireless communication with the wireless communication device 11 and the wireless terminal devices 13 and 14 existing in a communication range of the relay device 12.

Specifically, the control unit 155 acquires a data unit corresponding to the reception signal received by the antenna 134 by controlling the reception processing units 151b to 154b. The control unit 55 supplies the acquired data unit to the storage unit 156 and stores the data therein.

Similarly to the control unit 55 in Fig. 2, the control unit 155 generates transmission information and transmits a transmission signal of the transmission information from the antenna 134. Similarly to the control unit 55 in Fig. 2, the control unit 155 reads the transmission data stored in the storage unit 156 and transmits a transmission signal of the transmission data from the antenna 134. The control unit 155 reads the data unit stored in the storage unit 156, supplies the data unit to the transmission processing unit 151a, and controls the transmission processing units 151a to 154a to transmit the transmission signal of the transmission data from the antenna 134.

The control unit 155 controls the wireless communication with the wireless communication device 11 and the wireless terminal devices 13 and 14 as described above, and performs various processing using the wireless communication. For example, the control unit 155 establishes connection with the wireless communication device 11 and the wireless terminal devices 13 and 14. The control unit 155 generates adjustment information and transmits the adjustment information as transmission information.

The storage unit 156 stores information, transmission data, a data unit, and the like used for control by the control unit 155.

The control unit 132 controls the entire communication unit 131 and the control unit 155. Note that the control unit 132 may perform a part of the control performed by the control unit 155 instead. The control unit 132 and the control unit 155 may be integrated into one control unit.

The storage unit 133 stores information used for control by the control unit 132 and the control unit 155. The storage unit 133 may store some information or the like stored in the storage unit 156 instead. The storage unit 133 and the storage unit 156 may be integrated into one storage unit.

Note that, in the example of Fig. 3, the relay device 12 includes one wireless signal processing unit including the antenna 134, the wireless interface unit 153, and the amplification unit 154, but may include a plurality of the wireless signal processing units. The relay device 12 may include a plurality of processing units including the data processing unit 151 and the signal processing unit 152, and the plurality of processing units may be connected to one wireless interface unit 153. In a case where the relay device 12 is a configuration element of a plurality of the wireless communication systems 10, all or some of the configuration elements of the communication unit 131 may be included for each wireless communication system 10. In this case, all or some of the configuration elements of the communication unit 131 exist as many as the number of wireless communication systems 10 including the relay devices 12.

The relay device 12 may not include the control unit 132 and the storage unit 133. Alternatively, although the relay device 12 includes the control unit 132 and the storage unit 133, the functions of the control unit 132 and the storage unit 133 may be turned off.

### <Configuration example of wireless terminal device>

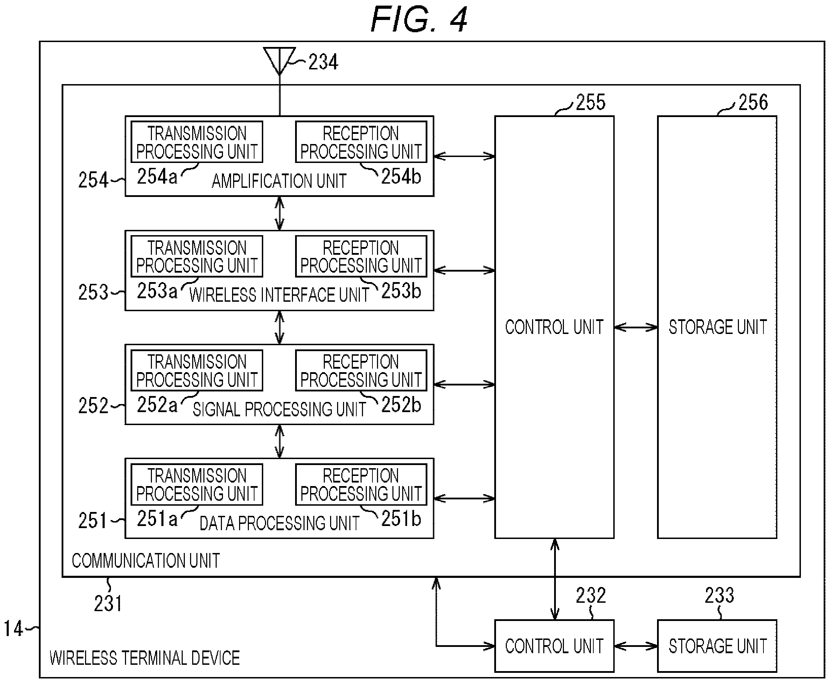

Fig. 4 is a block diagram illustrating a configuration example of the wireless terminal device 14 of Fig. 1.

The wireless terminal device 14 of Fig. 4 includes a communication unit 231, a control unit 232, a storage unit 233, and an antenna 234.

The communication unit 231 includes a data processing unit 251, a signal processing unit 252, a wireless interface unit 253, an amplification unit 254, a control unit 255, and a storage unit 256. The communication unit 231 can be realized by, for example, one or more LSIs.

The data processing unit 251 includes a transmission processing unit 251a and a reception processing unit 251b. The transmission processing unit 251a manages a transmission sequence of transmission data and transmission information supplied from the control unit 255. The transmission information in the wireless terminal device 14 is control information, management information, or the like that is notified to the wireless communication device 11 via the relay device 12 or directly notified to the relay device 12.

Similarly to the transmission processing unit 51a of Fig. 2, the transmission processing unit 251a generates data in units of frames corresponding to transmission data and transmission information at a timing according to a managed sequence, and supplies the data to the signal processing unit 252.

The reception processing unit 251b acquires data in units of frames supplied from the signal processing unit 252. Similarly to the reception processing unit 51b in Fig. 2, the reception processing unit 251b acquires reception information or reception data from the data in units of frames, and supplies the reception information or the reception data to the control unit 255. The reception information in the wireless terminal device 14 is control information, management information, or the like transmitted from the wireless communication device 11 via the relay device 12 or directly transmitted from the relay device 12. The reception information includes schedule information, adjustment information, and the like.

The signal processing unit 252 includes a transmission processing unit 252a and a reception processing unit 252b. Similarly to the transmission processing unit 52a in Fig. 2, the transmission processing unit 252a generates a symbol stream from the data in units of frames supplied from the transmission processing unit 251a and supplies the symbol stream to the wireless interface unit 253. Similarly to the reception processing unit 52b in Fig. 2, the reception processing unit 252b generates data in units of frames from the symbol stream supplied from the wireless interface unit 253 and supplies the data to the reception processing unit 251b.

The wireless interface unit 253 includes a transmission processing unit 253a and a reception processing unit 253b. Similarly to the transmission processing unit 53a in Fig. 2, the transmission processing unit 253a generates a transmission signal from the symbol stream supplied from the transmission processing unit 252a and supplies the transmission signal to the amplification unit 254. Similarly to the reception processing unit 53b in Fig. 2, the reception processing unit 253b generates a symbol stream from the reception signal supplied from the amplification unit 254 and supplies the symbol stream to the reception processing unit 252b.

The amplification unit 254 includes a transmission processing unit 254a and a reception processing unit 254b, and is connected to the antenna 234. The transmission processing unit 254a amplifies the transmission signal supplied from the transmission processing unit 253a. The amplification unit 254 transmits the amplified transmission signal to the relay device 12 connected to the wireless terminal device 14 via the antenna 234.

The reception processing unit 254b amplifies the reception signal transmitted from the relay device 12 and received via the antenna 234, and supplies the amplified reception signal to the reception processing unit 253b. Note that some of the configuration elements of the amplification unit 254 may be provided outside the communication unit 231 or may be provided in the wireless interface unit 253.

The control unit 255 is a wireless control device. Similarly to the control unit 55 in Fig. 2, the control unit 255 controls the operation of each unit of the communication unit 231 while referring to the storage unit 256 as necessary, thereby controlling the wireless communication with the wireless communication device 11 via the relay device 12 existing in a communication range of the wireless terminal device 14. As a result, the control unit 155 performs various processing using wireless communication. For example, the control unit 255 establishes connection with the relay device 12. The control unit 255 adjusts a start timing or a period of the schedule on the basis of the schedule information and the adjustment information supplied as the reception information from the reception processing unit 251b by controlling the reception of the schedule information and the adjustment information. The control unit 255 executes schedule processing, which is processing according to the schedule, at the adjusted start timing or period.

The storage unit 256 stores information, transmission data, reception data, and the like used for control by the control unit 255.

The control unit 232 controls the entire communication unit 231 and the control unit 255. Note that the control unit 232 may perform a part of the control performed by the control unit 255 instead. The control unit 232 and the control unit 255 may be integrated into one control unit.

The storage unit 233 stores information used for control by the control unit 232 and the control unit 255. The storage unit 233 may store some information stored by the storage unit 256 instead. The storage unit 233 and the storage unit 256 may be integrated into one storage unit.

Note that, in the example of Fig. 4, the wireless terminal device 14 includes one wireless signal processing unit including the antenna 234, the wireless interface unit 253, and the amplification unit 254, but may include a plurality of the wireless signal processing units. The wireless terminal device 14 may include a plurality of processing units including the data processing unit 251 and the signal processing unit 252, and the plurality of processing units may be connected to one wireless interface unit 253. In a case where the wireless terminal device 14 is a configuration element of a plurality of the wireless communication systems 10, all or some of the configuration elements of the communication unit 231 may be included for each wireless communication system 10. In this case, all or some of the configuration elements of the communication unit 231 exist as many as the number of wireless communication systems 10 including the wireless terminal devices 14.

The configuration of the wireless terminal device 13 is the same as the configuration of the wireless terminal device 14 in Fig. 4 except that wireless communication is not performed with the wireless communication device 11 via the relay device 12 but direct wireless communication is performed with both the wireless communication device 11 and the relay device 12, and thus the description thereof will be omitted.

### <Description of connection establishment processing in case where relay device is RRH>

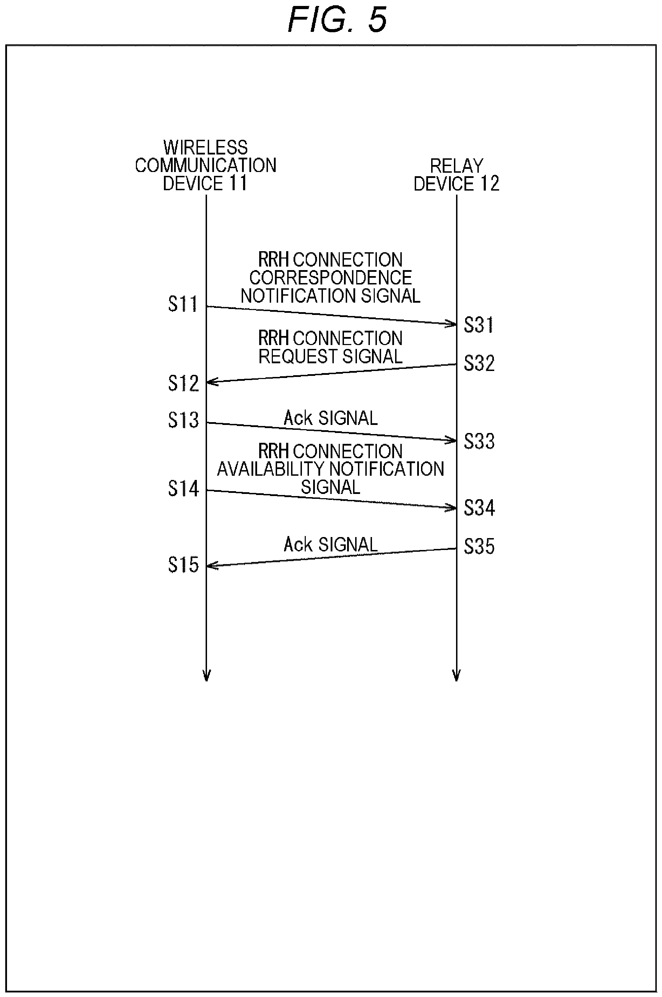

Fig. 5 is a flowchart explaining connection establishment processing performed between the wireless communication device 11 and the relay device 12 in a case where the relay device 12 is an RRH.

In step S11 of Fig. 5, the control unit 55 of the wireless communication device 11 causes the antenna 34 to transmit an RRH connection correspondence notification signal, which is a transmission signal including RRH connection correspondence information indicating that the connection with the RRH is supported as transmission information, to a broadcast destination. Note that the RRH connection correspondence notification signal may be transmitted as a Management signal which is a signal of a format of a Management frame defined by Institute of Electrical and Electronics Engineers (IEEE) 802.11, or may be transmitted as a Beacon signal of a format of a Beacon frame.

In step S31, the control unit 155 of the relay device 12 controls reception of the RRH connection correspondence notification signal transmitted by the processing in step S11, and acquires the RRH connection correspondence information as reception information.

After the processing in steps S11 and S31 is performed as the preparation processing (RRH Operation preparation) of the connection establishment processing between the wireless communication device 11 and the relay device 12 as described above, main processing of the connection establishment processing is performed.

Specifically, in step S32, the control unit 155 generates adjustment information, and transmits an RRH connection request signal (RRH Connection Request), which is a transmission signal including the adjustment information and RRH connection request information as the RRH for requesting connection to the wireless communication device 11, as transmission information, to the wireless communication device 11 via the antenna 134. The adjustment information can be generated on the basis of, for example, the information amount of the Beacon signal including the schedule information, the modulation and coding scheme used by the relay device 12, the operating frequency bandwidth of the relay device 12, the data rate based on the number of spatial streams of the relay device 12, or the like, the time required for the relay device 12 to start transmitting the Beacon signal, or the like.

In step S12, the control unit 55 controls the reception of the RRH connection request signal transmitted by the processing in step S32, and acquires the adjustment information and the RRH connection request information as reception information. In step S13, the control unit 55 causes an Acknowledgement (Ack) signal to be transmitted from the antenna 34 to the relay device 12.

In step S33, the control unit 155 controls the reception of the Ack signal transmitted by the processing in step S13 and acquires the Ack signal.

In step S14, the control unit 55 causes the antenna 34 to transmit an RRH connection availability notification signal (RRH Connection Response), which is a transmission signal including, as transmission information, RRH connection availability information indicating availability of connection with the relay device 12 as an RRH, to the relay device 12.

In step S34, the control unit 155 controls the reception of the RRH connection availability notification signal transmitted by the processing in step S14, and acquires the RRH connection availability information. In step S35, the control unit 155 causes an Ack signal to be transmitted from the antenna 134 to the wireless communication device 11.

In step S15, the control unit 55 controls the reception of the Ack signal transmitted by the processing in step S35 and acquires the Ack signal.

As described above, by the processing of steps S12 to S15 and S32 to S35, the wireless communication device 11 and the relay device 12 transmit and receive the RRH connection request signal and the RRH connection availability notification signal as signals related to establishment of mutual connection. Note that the Ack signal may not be transmitted in the connection establishment processing of Fig. 5.

When the connection establishment processing of Fig. 5 is performed as described above, the connection between the wireless communication device 11 and the relay device 12 is established, and the wireless communication is started between the wireless communication device 11 and the relay device 12. The wireless communication device 11 may transmit a Beacon signal including the number of relay devices 12 for which connection with the wireless communication device is established as transmission information to the broadcast destination.

### <Example of frame format of RRH connection request signal and RRH connection availability notification signal>

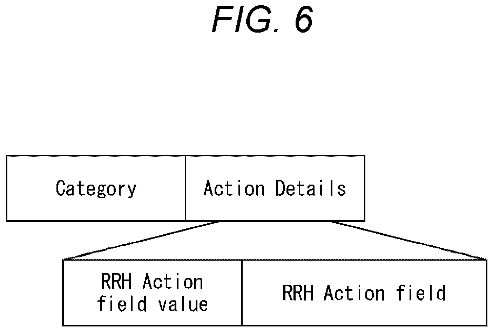

Figs. 6 to 8 are diagrams illustrating exemplary formats (configuration examples) of frames of the RRH connection request signal and the RRH connection availability notification signal.

As illustrated in Fig. 6, for example, a format of an Action frame defined by IEEE 802.11 is used as a format of frames of the RRH connection request signal and the RRH connection availability notification signal. In this case, the frames of the RRH connection request signal and the RRH connection availability notification signal include Category and Action Details. Information indicating that this signal is a signal related to the RRH is set in Category.

The Action Details include an RRH Action field value and an RRH Action field. Information indicating whether the signal is an RRH connection request signal or an RRH connection availability notification signal is set in the RRH Action field value.

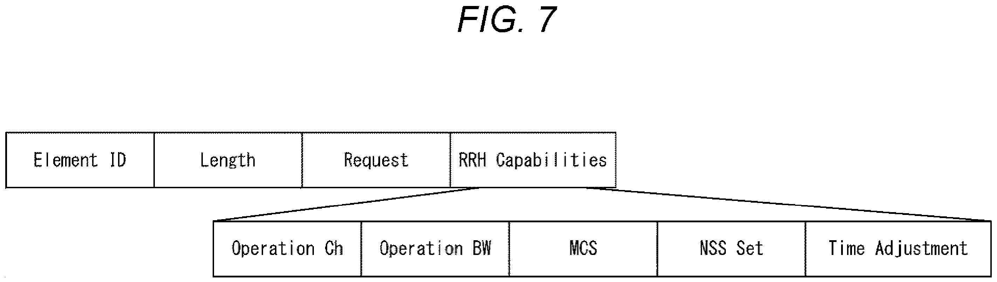

Fig. 7 is a diagram illustrating a format example of an RRH Action field value of the RRH connection request signal.

As illustrated in Fig. 7, the RRH Action field value of the RRH connection request signal includes Element ID, Length, Request, and RRH Capabilities. Information indicating that this format is a format of the RRH Action field value of the RRH connection request signal is set in Element ID. Information regarding a length of this format is set in Length. RRH connection request information is set in Request.

Information regarding capability as an RRH is set in RRH Capabilities. RRH Capabilities include Operation Ch, Operation BW, MCS, NSS Set, and Time Adjustment. In Operation Ch, information on an operation frequency channel of the relay device 12 is set. Information on an operation frequency bandwidth of the relay device 12 is set in Operation BW. Information on the maximum value of a modulation and coding scheme (MCS) used by the relay device 12 is set as MCS. Information on a spatial stream (Spatial Stream) used by the relay device 12 is set in NSS Set. Adjustment information is set in Time Adjustment.

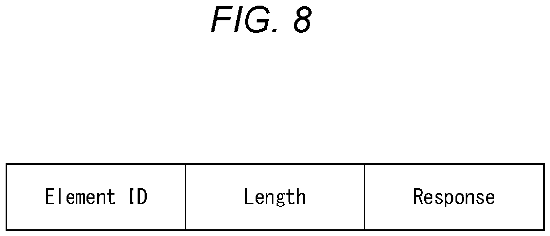

Fig. 8 is a diagram illustrating an example of a format of RRH Action field of the RRH connection availability notification signal.

As illustrated in Fig. 8, RRH Action field of the RRH connection availability notification signal includes Element ID, Length, and Request. Information indicating that this format is a format of RRH Action field value of the RRH connection availability notification signal is set in Element ID. Information regarding a length of this format is set in Length. Response includes RRH connection availability information.

### <Description of connection establishment processing in a case where relay device is AP functioning as RRH>

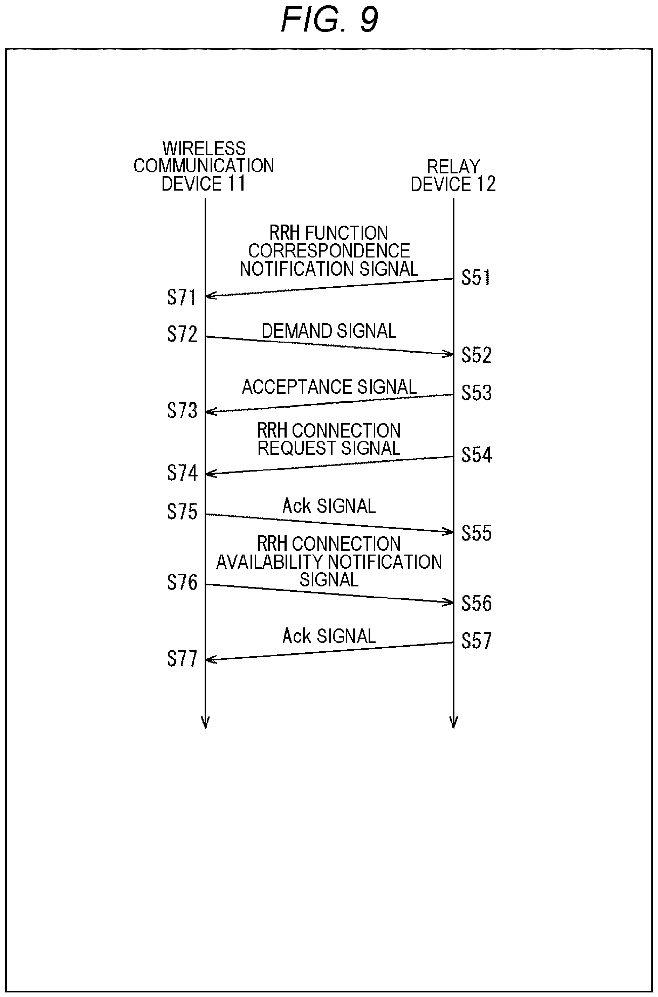

Fig. 9 is a diagram explaining connection establishment processing performed between the wireless communication device 11 and the relay device 12 in a case where the relay device 12 is an AP that functions as an RRH.

In step S51 of Fig. 9, the control unit 155 of the relay device 12 generates adjustment information. Then, the control unit 155 causes the antenna 134 to transmit an RRH function correspondence notification signal, which is a transmission signal including the adjustment information and the RRH function correspondence information indicating that the relay device has a function as the RRH as transmission information, to the broadcast destination.

In step S71, the control unit 55 of the wireless communication device 11 controls reception of the RRH function correspondence notification signal transmitted by the processing in step S51, and acquires the RRH function correspondence information and the adjustment information as reception information. In step S72, the control unit 55 causes the antenna 34 to transmit a demand signal including demand information demanding the operation as the RRH as transmission information to the relay device 12.

In step S52, the control unit 155 controls reception of the demand signal transmitted by the processing in step S72 and acquires the demand information. In step S53, the control unit 155 causes the antenna 134 to transmit, to the wireless communication device 11, an acceptance signal including, as transmission information, acceptance information for accepting the demand corresponding to the demand information.

In step S73, the control unit 55 controls reception of the acceptance signal transmitted by the processing in step S53, and acquires the acceptance information.

As described above, after the processing of steps S51 to S53 and steps S71 to S73 is performed as preparation processing of the connection establishment processing between the wireless communication device 11 and the relay device 12, main processing of the connection establishment processing is performed. Specifically, processing of steps S54 to S57 and S74 to S77 is performed. The processing in steps S54 to S57 and S74 to S77 is similar to the processing in steps S12 to S15 and S32 to S35 in Fig. 5, and thus the description thereof is omitted.

When the connection establishment processing of Fig. 9 is performed as described above, the connection between the wireless communication device 11 and the relay device 12 is established, and the wireless communication is started between the wireless communication device 11 and the relay device 12. The wireless communication device 11 may transmit a Beacon signal including the number of relay devices 12 for which connection with the wireless communication device is established as transmission information to the broadcast destination.

When the connection establishment processing described with reference to Figs. 5 and 9 is performed and the processing of establishing connection between each of the wireless communication device 11 and the relay device 12, and the wireless terminal device 13 is performed, the wireless terminal device starts various processing using wireless communication such as schedule processing.

Furthermore, when the connection establishment processing described with reference to Figs. 5 and 9 is performed and the processing of establishing the connection between the relay device 12 and the wireless terminal device 14 is performed, the wireless terminal device 14 starts various processing using wireless communication such as the schedule processing.

### <First example of frame format of RRH function correspondence notification signal>

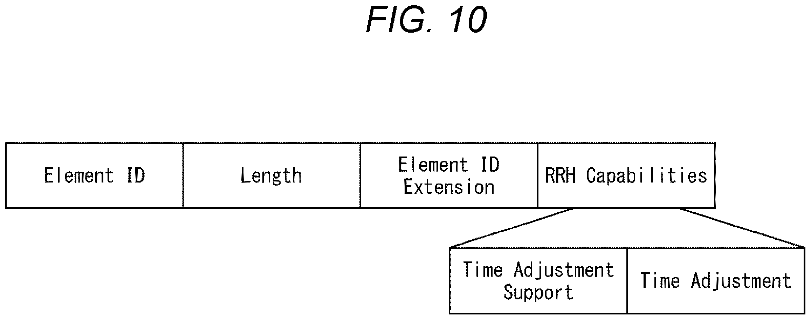

Fig. 10 is a diagram illustrating an example of a frame format of the RRH function correspondence notification signal.

As a frame format of the RRH function correspondence notification signal, a format such as a Beacon frame, a Probe Request frame, or a Probe Response frame defined in IEEE 802.11 is used. Fig. 10 illustrates only a format of Element in the frame format of the RRH function correspondence notification signal.

As illustrated in Fig. 10, Element includes Element ID, Length, Element ID Extension, and RRH Capabilities. Information indicating that this format is a format of the RRH function correspondence notification signal is set in Element ID and Element ID Extension. Information regarding a length of this format is set in Length. RRH Capabilities include Time Adjustment Support and Time Adjustment. In Time Adjustment Support, compatibility information indicating whether or not the relay device 12 supports adjustment of at least one of a start timing and a period of the schedule is set. Adjustment information is set in Time Adjustment.

### <Description of schedule processing in case where start timing of schedule is adjusted>

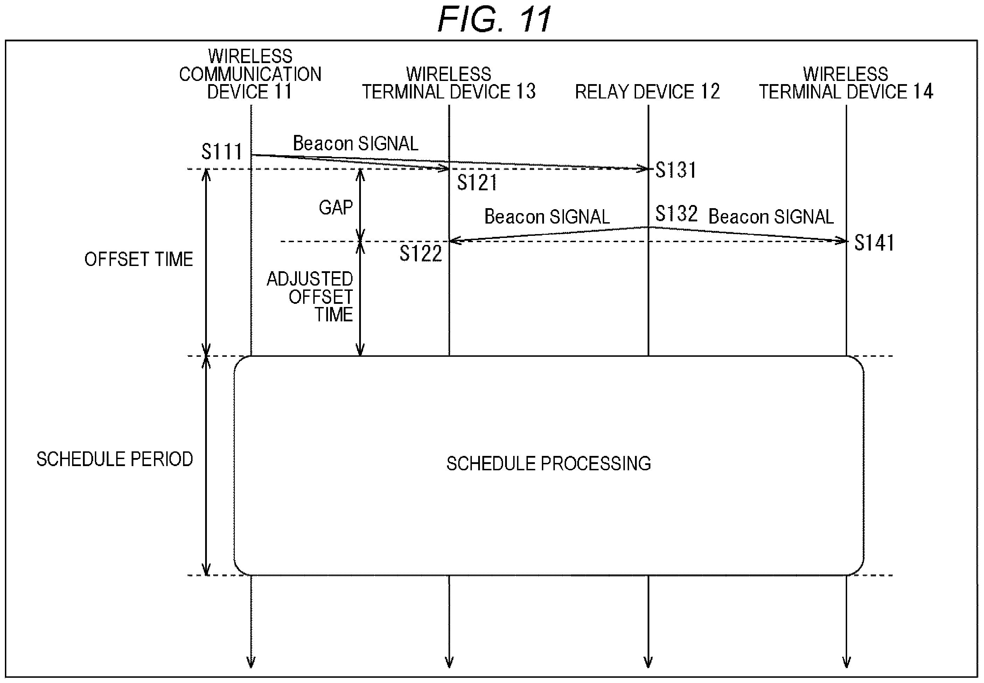

Fig. 11 is a flowchart explaining the schedule processing in a case where the start timing of the schedule is adjusted.

The processing of Fig. 11 is performed after the connection establishment processing described with reference to Figs. 5 and 9 is performed, the connection between the wireless communication device 11 and the wireless terminal device 13 is established, and the connection between the relay device 12 and each of the wireless terminal devices 13 and 14 is established. That is, it is performed after the connection between the wireless communication device 11 and the wireless terminal device 13 and the connection between the wireless communication device 11 and each of the wireless terminal devices 13 and 14 via the relay device 12 are established.

In step S111 of Fig. 11, the control unit 55 of the wireless communication device 11 causes the antenna 34 to transmit, as a transmission signal, a Beacon signal including schedule information as transmission information to the broadcast destination.

In step S121, a control unit of the wireless terminal device 13, which is configured similarly to the control unit 255, controls reception of the Beacon signal transmitted by the processing in step S111 and acquires the schedule information as reception information. Then, the control unit of the wireless terminal device 13 controls each unit to start the schedule processing at the start timing indicated by the schedule information.

Specifically, the information indicating the start timing included in the schedule information is, for example, the time of the start timing starting from when the schedule information is received, that is, the offset time from when the schedule information is received to when the schedule processing is started. Therefore, the control unit of the wireless terminal device 13 starts the schedule processing after the offset time from the reception of the Beacon signal including the schedule information by controlling each unit. Furthermore, the control unit of the wireless terminal device 13 controls each unit to end the schedule processing after a schedule period, which is a period indicated by the schedule information, from the start.

In step S131, the control unit 155 of the relay device 12 controls the reception of the Beacon signal transmitted by the processing in step S111, and acquires a data unit of the schedule information. In step S132, the control unit 155 generates the adjustment information, and causes the antenna 134 to transmit a Beacon signal including the adjustment information and the data unit of the schedule information to the broadcast destination.

In step S122, the control unit of the wireless terminal device 13 controls reception of the Beacon signal transmitted by the processing in step S132, and acquires the adjustment information and the schedule information as reception information.

In step S141, the control unit 255 of the wireless terminal device 14 controls reception of the Beacon signal transmitted by the processing in step S132, and acquires the adjustment information and the schedule information as reception information. Then, the control unit 255 controls each unit on the basis of the schedule information and the adjustment information, and adjusts the start timing of the schedule so as to be delayed by a gap represented by the adjustment information.

Specifically, the control unit 255 subtracts the gap from the offset time indicated by the schedule information to obtain an offset time after the adjustment (Adjusted Offset). The control unit 255 starts the schedule processing after the offset time after the adjustment by controlling each unit after receiving the Beacon signal including the schedule information and the adjustment information. Furthermore, the control unit 255 controls each unit to end the schedule processing after the schedule period indicated by the schedule information from the start.

As described above, the start timing of the schedule processing of the wireless terminal device 13 that performs wireless communication with the wireless communication device 11 not via the relay device 12 and the start timing of the schedule processing of the wireless terminal device 14 that performs wireless communication with the wireless communication device 11 via the relay device 12 are the same.

Specifically, the adjusted offset time is a time obtained by subtracting the gap from the offset time. Furthermore, the wireless terminal device 14 receives the Beacon signal via the relay device 12 after the gap from when the wireless terminal device 13 receives the Beacon signal including schedule information from the wireless communication device 11. Therefore, the start timing after the adjusted offset time from when the wireless terminal device 14 receives the Beacon signal becomes the same as the start timing after the offset time from when the wireless terminal device 13 directly receives the Beacon signal from the wireless communication device 11.

The schedule processing is performed only in the schedule period. As described above, the start timing of the schedule processing of the wireless terminal device 13 that performs wireless communication with the wireless communication device 11 via no relay device 12 is the same as the start timing of the schedule processing of the wireless terminal device 13 that performs wireless communication with the wireless communication device 11 via the relay device 12. Therefore, the end timings of both schedule processing are the same.

Note that the schedule information may indicate the end timing of the schedule starting from when the schedule information is received, instead of the period of the schedule. In this case, the end timing may be adjusted based on the adjustment information similarly to the start timing, or may not be adjusted.

The relay device 12 may transmit not the adjustment information but a Beacon signal including the adjusted offset time as the transmission information to the broadcast destination. In this case, the control unit 255 starts the schedule processing on the basis of the adjusted offset time.

### <Description of schedule processing in case where schedule period is adjusted>

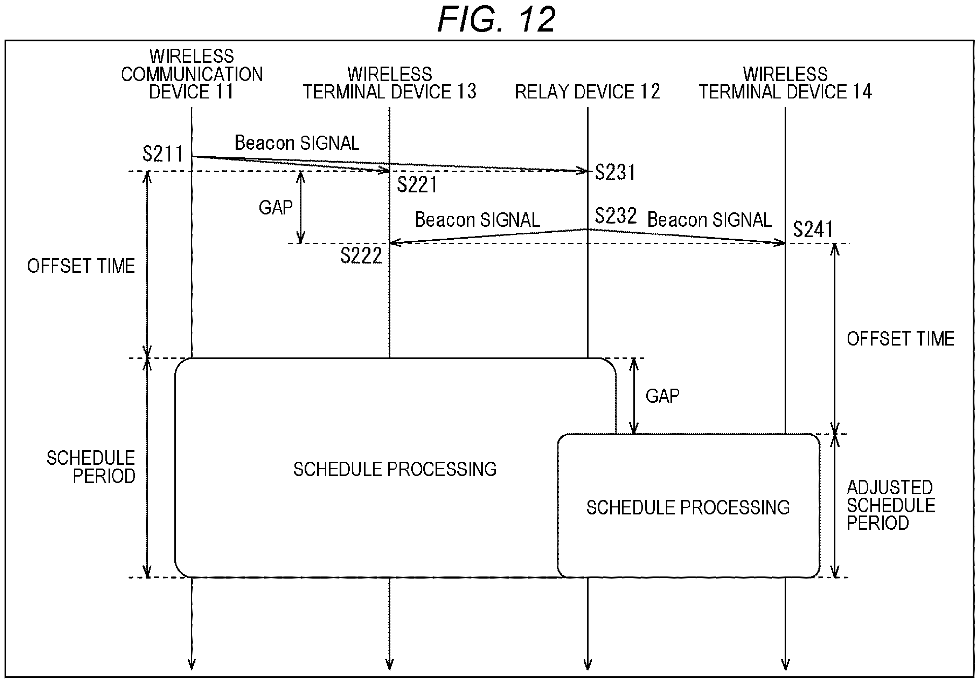

Fig. 12 is a flowchart explaining schedule processing in a case where the schedule period is adjusted.

The processing of Fig. 12 is performed after the connection establishment processing described with reference to Figs. 5 and 9 is performed, the connection between the wireless communication device 11 and the wireless terminal device 13 is established, and the connection between the relay device 12 and each of the wireless terminal devices 13 and 14 is established.

The processing of steps S211, S221, and S222, and S231 and S232 in Fig. 12 is similar to the processing of steps S111, S121, and S122, and S131 and S132 in Fig. 11, and thus description thereof is omitted.

In step S241, the control unit 255 of the wireless terminal device 14 controls reception of the Beacon signal transmitted in the processing in step S232, and acquires the adjustment information and the schedule information as reception information. Then, the control unit 255 controls each unit on the basis of the schedule information and the adjustment information, and adjusts the schedule period so as to shorten a gap represented by the adjustment information.

Specifically, the control unit 255 subtracts the gap from the schedule period indicated by the schedule information to obtain a schedule period after the adjustment (an Adjusted Period). By controlling each unit, the control unit 255 starts the schedule processing after the offset time from the reception of the Beacon signal including the schedule information and the adjustment information. Furthermore, the control unit 255 controls each unit to end the schedule processing after the adjusted schedule period from the start.

As described above, the end timing of the schedule processing of the wireless terminal device 13 that performs wireless communication with the wireless communication device 11 not via the relay device 12 and the end timing of the schedule processing of the wireless terminal device 14 that performs wireless communication with the wireless communication device 11 via the relay device 12 are the same.

Specifically, the wireless terminal device 14 receives the Beacon signal via the relay device 12 after the gap from when the wireless terminal device 13 receives the Beacon signal including schedule information from the wireless communication device 11. Therefore, the start timing of the schedule processing of the wireless terminal device 14 that performs wireless communication with the wireless communication device 11 via the relay device 12 is after the gap from the start timing of the schedule processing of the wireless terminal device 13 that performs wireless communication with the wireless communication device 11 not via the relay device 12.

Here, the adjusted schedule period is a time obtained by subtracting the gap from the schedule period. Therefore, the end timing of the schedule processing after the schedule period from the start of the schedule processing in the wireless terminal device 13 becomes the same as the end timing of the schedule processing after the adjusted schedule period from the start of the schedule processing in the wireless terminal device 14.

Note that the schedule information may indicate not the schedule period but the end timing starting from when the schedule information is received. In this case, the end timing is adjusted forward by the gap on the basis of the adjustment information.

The relay device 12 may transmit a Beacon signal including not the adjustment information but the adjusted schedule period as transmission information to the broadcast destination. In this case, the control unit 255 ends the schedule processing on the basis of the adjusted schedule period.

The adjustment information acquired from the relay device 12 by the connection establishment processing described with reference to Figs. 5 and 9 may be included as the transmission information in the Beacon signal transmitted from the wireless communication device 11 in the processing of step S111 of Fig. 11 or step S211 of Fig. 12. In this case, in step S132 of Fig. 11 or step S232 of Fig. 12, the control unit 155 does not generate the adjustment information and transmits the Beacon signal including the data unit of the adjustment information to the broadcast destination.

The adjustment information is set in the Beacon signal similarly to the case of being set in the RRH function correspondence notification signal of Fig. 10 described above.

### <Description of TWT processing in case where start timing is adjusted>

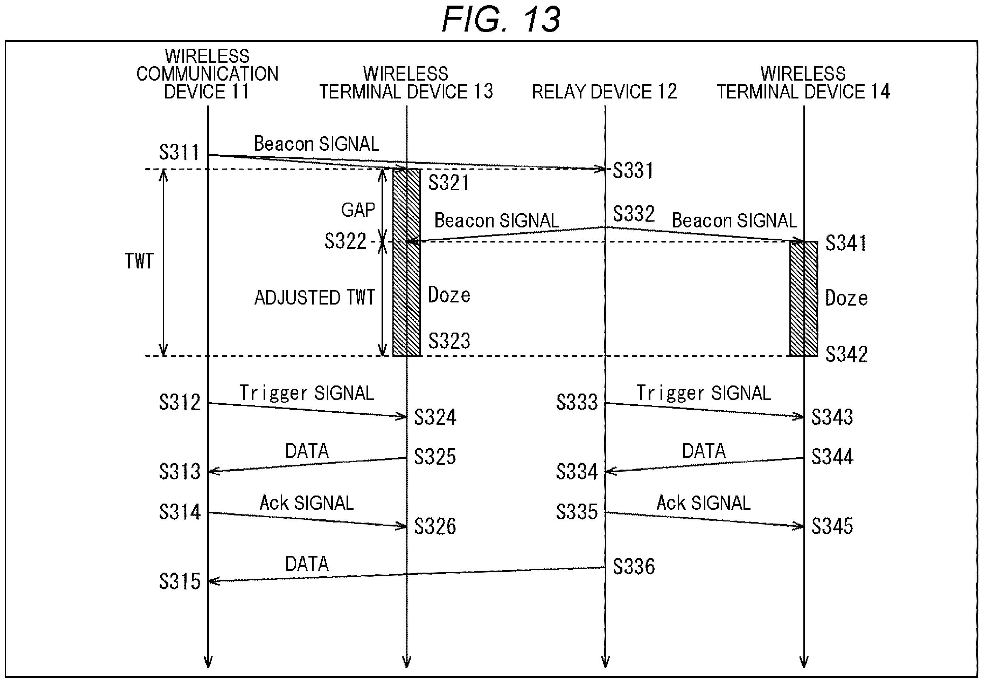

Fig. 13 is a flowchart explaining target wake time (TWT) processing as schedule processing in a case where the start timing is adjusted.

The processing of Fig. 13 is performed after the connection establishment processing described with reference to Figs. 5 and 9 is performed, the connection between the wireless communication device 11 and the wireless terminal device 13 is established, and the connection between the relay device 12 and each of the wireless terminal devices 13 and 14 is established.

In step S311 of Fig. 13, the control unit 55 of the wireless communication device 11 causes the antenna 34 to transmit, as a transmission signal, a Beacon signal including TWT information, which is schedule information indicating the start timing of TWT processing, as transmission information to the broadcast destination. The TWT processing is processing of activating wireless communication between the wireless communication device 11 and the wireless terminal device 13 or 14 at a start timing starting from when the TWT information is received.

In step S321, a control unit of the wireless terminal device 13, which is configured similarly to the control unit 255, controls reception of the Beacon signal transmitted from the antenna 34 by the processing in step S311, and acquires the TWT information as reception information.

Then, the control unit of the wireless terminal device 13 sets the start timing of the TWT processing to the start timing indicated by the TWT information. Specifically, the TWT information is, for example, the time of the start timing of the TWT processing starting from the reception of the TWT information, that is, TWT that is the time from the reception of the TWT information to the start of the TWT processing. Therefore, the control unit of the wireless terminal device 13 sets a timing after TWT from the reception of the Beacon signal including the TWT information as the start timing of the TWT processing. The control unit of the wireless terminal device 13 also shifts the state of the wireless terminal device 13 to a power saving state (Doze) .

In step S331, the control unit 155 of the relay device 12 controls reception of the Beacon signal transmitted by the processing in step S311, and acquires a data unit of the TWT information. In step S332, the control unit 155 generates adjustment information, and causes the antenna 134 to transmit the Beacon signal including the adjustment information and the data unit of the TWT information to the broadcast destination.

In step S322, the control unit of the wireless terminal device 13 controls reception of the Beacon signal transmitted by the processing in step S332, and acquires the adjustment information and the TWT information as reception information.

In step S341, the control unit 255 of the wireless terminal device 14 controls reception of the Beacon signal transmitted by the processing in step S332, and acquires the adjustment information and the TWT information as reception information.

Then, the control unit 255 adjusts the start timing of the TWT processing so as to be delayed by a gap represented by the adjustment information on the basis of the TWT information and the adjustment information. Specifically, the control unit 255 subtracts the gap from the TWT, which is the TWT information, to obtain an adjusted TWT. The control unit 255 sets a timing after the adjusted TWT from the reception of the Beacon signal including the TWT information and the adjustment information as the start timing of the TWT processing. The control unit 255 also causes the state of the wireless terminal device 14 to transition to the power saving state.

After TWT from the reception of the Beacon signal by the processing in step S321, in step S323, the control unit of the wireless terminal device 13 cancels (Awake) the power saving state and performs TWT processing by controlling each unit.

Furthermore, after the adjusted TWT since the Beacon signal is received by the processing in step S341, in step S342, the control unit 255 releases the power saving state and performs the TWT processing by controlling each unit.

As described above, the start timing of the TWT processing of the wireless terminal device 13 that performs wireless communication with the wireless communication device 11 not via the relay device 12 and the start timing of the TWT processing of the wireless terminal device 14 that performs wireless communication with the wireless communication device 11 via the relay device 12 are the same.

Specifically, the adjusted TWT is a time obtained by subtracting the gap from the TWT. Furthermore, the wireless terminal device 14 receives the Beacon signal via the relay device 12 after the gap from when the wireless terminal device 13 receives the Beacon signal including the TWT information from the wireless communication device 11. Therefore, the start timing after the adjusted TWT from when the wireless terminal device 14 receives the Beacon signal becomes the same as the start timing after TWT from when the wireless terminal device 13 directly receives the Beacon signal from the wireless communication device 11.

After the TWT processing is performed, the wireless communication device 11 and the wireless terminal device 13 perform wireless communication, and the wireless communication device 11 and the wireless terminal device 14 perform wireless communication via the relay device **12.**

For example, in step S312, the control unit 55 causes the antenna 34 to transmit a Trigger signal that induces transmission of transmission data as a transmission signal to the wireless terminal device 13. This Trigger signal is a signal including, as transmission information, communication parameters such as a modulation and coding scheme, a frequency band, a frequency bandwidth, and the number of spatial streams, and type information that is information regarding the type of transmission data to be transmitted for induced transmission, which are used by the wireless terminal device 13.

Furthermore, in step S333, the control unit 155 causes the antenna 134 to transmit a Trigger signal that induces transmission of the transmission data as a transmission signal to the wireless terminal device 14. This Trigger signal is a signal including the communication parameters and the type information used by the wireless terminal device 14 as transmission information. The communication parameters used by the wireless terminal device 13 and the communication parameters used by the wireless terminal device 14 can be set such that the wireless terminal device 13 and the wireless terminal device 14 use communication resources orthogonal to each other.

Note that the control unit 55 may cause the antenna 34 to transmit a signal (Coordination Trigger) for cooperatively transmitting the Trigger signal to the relay device 12 before causing the Trigger signal to be transmitted in step S312. This signal can include information regarding the Trigger signal transmitted by the relay device 12 and information regarding the transmission timing of the Trigger signal. In a case where the signal is transmitted, the control unit 155 receives the Trigger signal before transmitting the Trigger signal in step S333, and performs the processing of step S333 on the basis of the signal.

In step S324, the control unit of the wireless terminal device 13 controls reception of the Trigger signal transmitted by the processing in step S312, and acquires the communication parameters and the type information as reception information. In step S325, the control unit of the wireless terminal device 13 causes the antenna to transmit predetermined data as transmission data to the wireless communication device 11 on the basis of the reception information.

Furthermore, in step S343, the control unit 255 of the wireless terminal device 14 controls reception of the Trigger signal transmitted by the processing in step S333, and acquires the communication parameters and the type information as reception information. In step S344, the control unit 255 causes the antenna 234 to transmit predetermined data as transmission data to the relay device 12 on the basis of the reception information.

In step S313, the control unit 55 controls reception of the data transmitted by the processing in step S325 and acquires the data as reception data. In step S314, the control unit 55 causes the antenna 34 to transmit an Ack signal to the wireless terminal device 13.

In step S326, the control unit of the wireless terminal device 13 controls reception of the Ack signal transmitted by the processing in step S314, and acquires the Ack signal.

Furthermore, in step S334, the control unit 155 controls reception of the data transmitted by the processing in step S344 and acquires the data as reception data. In step S335, the control unit 55 causes the antenna 134 to transmit an Ack signal to the wireless terminal device 14.

In step S345, the control unit 255 controls reception of the Ack signal transmitted by the processing in step S335 and acquires the Ack signal.

In step S336, the control unit 155 causes the antenna 134 to transmit the reception data acquired by the processing in step S344 to the wireless communication device 11 as transmission data. That is, the control unit 155 transfers the data transmitted from the wireless terminal device 14 to the wireless communication device 11.

In step S315, the control unit 55 controls reception of the data transmitted by the processing in step S336 and acquires the data as reception data.

Note that the adjustment information acquired from the relay device 12 by the connection establishment processing described in Figs. 5 and 9 may be included in the Beacon signal transmitted from the wireless communication device 11 as the transmission information. In this case, in step S332, the control unit 155 does not generate the adjustment information and transmits the Beacon signal including the data unit of the adjustment information to the broadcast destination.

The adjustment information is not information representing the gap, but may be information set such that the start timing adjusted on the basis of the adjustment information and the TWT information is after the end of the wireless communication between the wireless communication device 11 and the wireless terminal device 13, that is, after the processing of step S326. In this case, after the end of the wireless communication between the wireless communication device 11 and the wireless terminal device 13, the wireless terminal device 14 performs the TWT processing and starts the wireless communication with the wireless communication device 11 via the relay device 12.

### <Example of frame format of Beacon signal including TWT information and adjustment information>

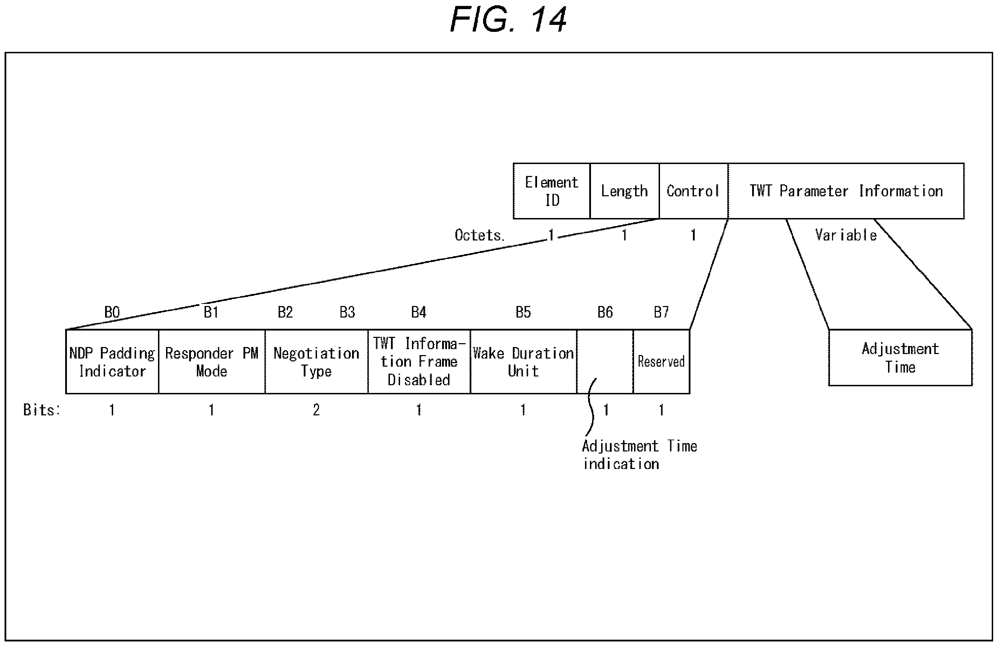

Fig. 14 is a diagram illustrating an example of a frame format of the Beacon signal including the TWT information and the adjustment information transmitted by the processing in step S332 in Fig. 13.

Fig. 14 illustrates only the format of Element in the frame format of the Beacon signal.

As illustrated in Fig. 14, Element of the Beacon signal including the TWT information and the adjustment information includes 1-octet Element ID, 1-octet Length, 1-octet Control, and TWT Parameter Information. Information indicating that this format is a format of a Beacon signal including TWT information and adjustment information is set in Element ID. Information regarding a length of this format is set in Length.

Control includes an NDP Padding Indicator of 1 bit, a Responder PM Mode of 1 bit, a Negotiation Type of 2 bits, TWT Information Frame Disabled of 1 bit, a Wake Duration unit of 1 bit, an Adjustment Time indication of 1 bit, and Reserved of 1 bit.

Information indicating whether or not information regarding Padding is included in TWT Parameter Information is set in NDP Padding Indicator. Information regarding operation control in the power saving state is set in Responder PM Mode. Information indicating whether the TWT information is addressed to the individual wireless terminal device 13 (14) or broadcast is set in Negotiation Type.

Information indicating whether or not the wireless terminal device 13 (14) rejects the TWT processing is set in TWT Information Frame Disabled. Information regarding a time unit of a period in which the power saving state of the wireless terminal device 13 (14) is released is set in Wake Duration Unit. Adjustment information presence/absence information indicating whether or not a Beacon signal includes adjustment information, more specifically, whether or not adjustment information is set in TWT Parameter Information is set in Adjustment Time Indication. For example, the adjustment information presence/absence information is 0 in a case where the Beacon signal does not include the adjustment information, and is 1 in a case where the Beacon signal includes the adjustment information. Reserved is a reserved area.

In a case where the adjustment information presence/absence information set in Adjustment Time Indication is 0, one TWT related information (Individual TWT Parameter Set) corresponding to the wireless terminal device 13 (14) is set in TWT Parameter Information as information addressed to the individual wireless terminal device 13 (14). Alternatively, one or more pieces of TWT related information (Broadcast TWT Parameter Set) corresponding to the wireless terminal devices 13 and 14 are set as information addressed to the broadcast. The TWT related information is information regarding the TWT processing and includes TWT information.

On the other hand, in a case where the adjustment information presence/absence information is 1, one adjustment information (Adjustment Time) and one TWT related information corresponding to the individual wireless terminal device 13 (14) are set in TWT Parameter Information as information addressed to the wireless terminal device 13 (14). Alternatively, the adjustment information and the TWT related information corresponding to each of the wireless terminal devices 13 and 14 are set as the information addressed to the broadcast. The adjustment information is represented by, for example, an integer corresponding to a timing synchronization function (TSF) timer.

Note that the adjustment information and the TWT information may be transmitted as different frames.

### <Description of CFP processing in case where schedule period is adjusted>

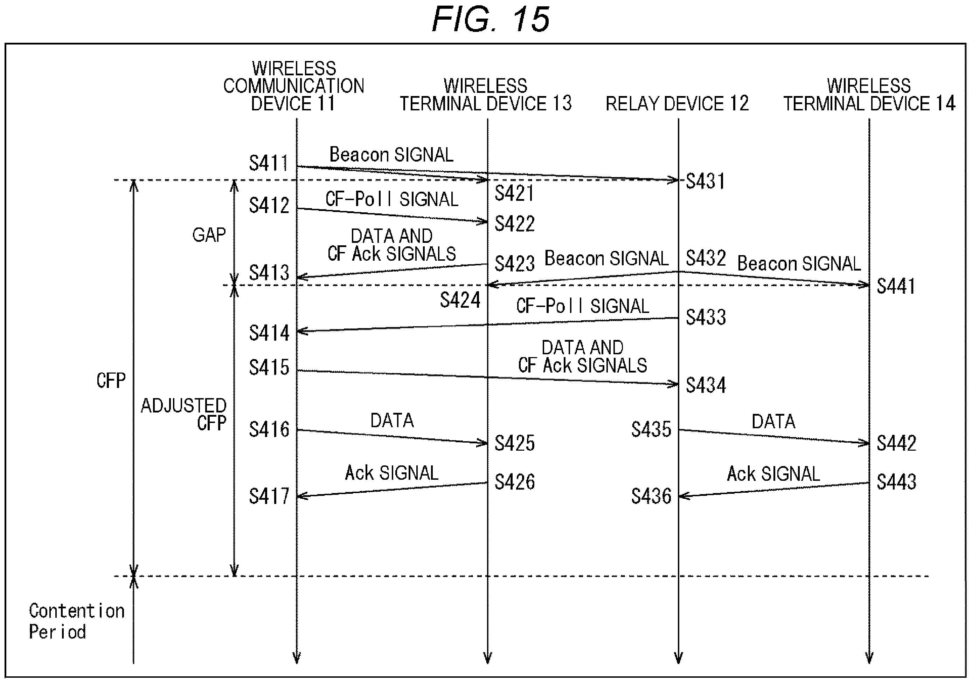

Fig. 15 is a flowchart explaining contention free period (CFP) processing as schedule processing in a case where the schedule period is adjusted.

The processing of Fig. 15 is performed after the connection establishment processing described with reference to Figs. 5 and 9 is performed, the connection between the wireless communication device 11 and the wireless terminal device 13 is established, and the connection between the relay device 12 and each of the wireless terminal devices 13 and 14 is established.

In step S411 of Fig. 15, the control unit 55 of the wireless communication device 11 causes the antenna 34 to transmit, as a transmission signal, a Beacon signal including CFP information, which is schedule information indicating CFP that is a schedule period of CFP processing, as transmission information to the broadcast destination.

Then, the control unit 55 controls each unit and starts the CFP processing so as to end after CFP. The CFP processing is processing of transmitting a contention free poll) CF-Poll signal that is a signal of a CF-Poll frame, replying data and a contention free Ack (CF Ack) signal to the CF-Poll signal, transmitting data, replying an Ack signal, continuously transmitting signals to a broadcast or to a multicast group at regular intervals, or the like. The CFP processing is started at a timing when the CFP information is transmitted or received.

In step S421, a control unit of the wireless terminal device 13, which is configured similarly to the control unit 255, controls reception of the Beacon signal transmitted by the processing in step S411 and acquires the CFP information as reception information.

Then, the control unit of the wireless terminal device 13 controls each unit and starts the CFP processing so as to end after the CFP indicated by the CFP information. Specifically, the CFP information is information indicating the end timing of the CFP, that is, the end timing of the CFP processing starting from when the CFP information is received. Therefore, on the basis of the CFP information, the control unit of the wireless terminal device 13 starts the CFP processing so as to end after the CFP from when the Beacon signal including the CFP information is received.

As described above, when both the wireless communication device 11 and the wireless terminal device 13 start the CFP processing, in step S412, the control unit 55 causes the antenna 34 to transmit a CF-Poll signal as a transmission signal to the wireless terminal device 13.

In step S422, the control unit of the wireless terminal device 13 controls reception of the CF-Poll signal transmitted by the processing in step S412. In step S423, the control unit of the wireless terminal device 13 transmits a signal including predetermined data as transmission data and a contention free Ack (CF Ack) signal as transmission signals from the antenna to the wireless communication device 11 according to the CF-Poll signal.

In step S413, the control unit 55 controls reception of the signals including the predetermined data and the CF Ack signal transmitted by the processing in step S423.

On the other hand, in step S431, the control unit 155 of the relay device 12 controls reception of the Beacon signal transmitted by the processing in step S411, and acquires a data unit of CFP information. In step S432, the control unit 155 generates adjustment information, and causes the antenna 134 to transmit a Beacon signal including the adjustment information and the data unit of the CFP information to the broadcast destination. Then, the control unit 155 controls each unit and starts the CFP processing so as to end after the CFP indicated by the CFP information.

In step S424, the control unit of the wireless terminal device 13 controls reception of the Beacon signal transmitted by the processing in step S432, and acquires the adjustment information and the CFP information as reception information.

In step S441, the control unit 255 of the wireless terminal device 14 controls reception of the Beacon signal transmitted by the processing in step S432, and acquires the adjustment information and the CFP information as reception information. Then, the control unit 255 controls each unit on the basis of the CFP information and the adjustment information, and performs adjustment so that the CFP of the CFP processing is shortened by a gap.

Specifically, the control unit 255 subtracts the gap from the CFP indicated by the CFP information to obtain an adjusted CFP. The control unit 255 controls each unit to start the CFP processing so as to end the CFP processing after the adjusted CFP from the reception of the Beacon signal including the CFP information and the adjustment information.

As described above, when both the relay device 12 and the wireless terminal device 14 start the CFP processing, in step S433, the control unit 155 causes the antenna 134 to transmit a CF-Poll signal as a transmission signal to the wireless communication device 11.

In step S414, the control unit 55 controls reception of the CF-Poll signal transmitted by the processing in step S433. In step S415, the control unit 55 causes the antenna 34 to transmit a signal including predetermined data as transmission data and a CF Ack signal as transmission signals to the relay device 12 according to the CF-Poll signal.

In step S434, the control unit 155 controls reception of the signal including the predetermined data and the CF Ack signal transmitted by the processing in step S415. In step S435, the control unit 155 causes the antenna 134 to transmit a transmission signal including the data as transmission data to the wireless terminal device 14.

In step S442, the control unit 255 controls reception of the transmission signal transmitted by the processing in step S435, and acquires the transmission data as reception data. In step S443, the control unit 255 causes the antenna 234 to transmit an Ack signal as a transmission signal to the relay device 12.

In step S436, the control unit 155 controls reception of the Ack signal transmitted by the processing in step S443.

After the processing of step S415, in step S416, the control unit 55 causes the antenna 34 to transmit a transmission signal including predetermined data as transmission data to the wireless terminal device 13.

In step S425, the control unit of the wireless terminal device 13 controls reception of the transmission signal transmitted by the processing in step S416, and acquires the transmission data as reception data. In step S426, the control unit of the wireless terminal device 13 transmits an Ack signal as a transmission signal from the antenna to the wireless communication device 11.

In step S417, the control unit 55 controls reception of the Ack signal transmitted by the processing in step S426.

As described above, the CFP processing is performed in the wireless communication device 11, the relay device 12, the wireless terminal device 13, and the wireless terminal device 14. Then, the CFP processing of the wireless terminal devices 13 and 14 is simultaneously ended.

Specifically, the wireless terminal device 14 receives the Beacon signal via the relay device 12 after the gap from when the wireless terminal device 13 receives the Beacon signal including CFP information from the wireless communication device 11. Therefore, the start timing of the CFP processing of the wireless terminal device 14 that performs wireless communication with the wireless communication device 11 via the relay device 12 is after the gap from the start timing of the CFP processing of the wireless terminal device 13 that performs wireless communication with the wireless communication device 11 not via the relay device 12.

Here, the adjusted CFP is a time obtained by subtracting the gap from the CFP. Therefore, the end timing after the CFP from the start of the CFP processing in the wireless terminal device 13 becomes the same as the end timing after the adjusted CFP from the start of the CFP processing in the wireless terminal device 14.

Note that, in the example of Fig. 15, the end timing of the CFP processing of the wireless communication device 11 and the relay device 12 is assumed to be the same as the end timing of the CFP processing of the wireless terminal devices 13 and 14.

After the CFP processing is ended, the wireless communication device 11, the relay device 12, and the wireless terminal devices 13 and 14 perform Contention Period processing. This Contention Period processing is performed, for example, during a Contention Period. The Contention Period processing is communication processing based on acquisition of a communication right by a backoff procedure, normal communication processing in a wireless local area network (WLAN), or the like.

Note that the adjustment information acquired from the relay device 12 by the connection establishment processing described in Figs. 5 and 9 may be included in the Beacon signal transmitted from the wireless communication device 11 as the transmission information. In this case, in step S432, the control unit 155 does not generate the adjustment information and transmits the Beacon signal including the data unit of the adjustment information to the broadcast destination.

The relay device 12 may transmit not the adjustment information but a Beacon signal including the adjusted CFP as transmission information to the broadcast destination. In this case, in step S441, the control unit 255 starts the CFP processing so as to end after the adjusted CFP.

Note that, in a case where there is a plurality of the schedule processing in which at least one of the start timing and the schedule period can be adjusted, the RRH connection request signal and the RRH function correspondence notification signal include adjustment information of each schedule processing as transmission information. The Beacon signal transmitted from the relay device 12 includes the schedule information and the adjustment information of each schedule processing.

### <Second example of frame format of RRH function correspondence notification signal>

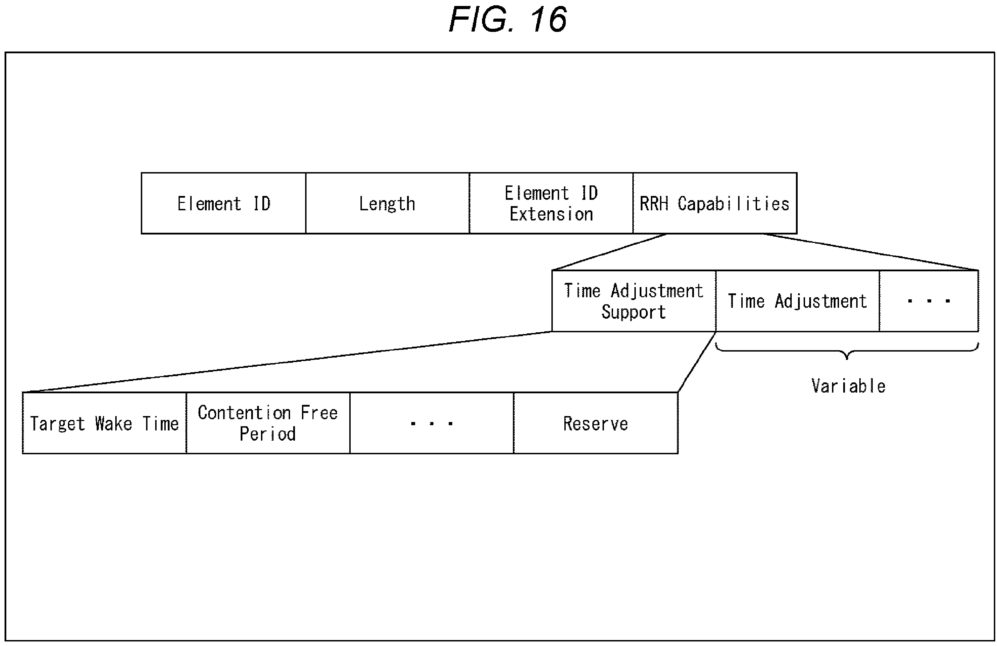

Fig. 16 is a diagram illustrating an example of a frame format of the RRH function correspondence notification signal in this case.

The format of Element of the RRH function correspondence notification signal of Fig. 16 is different from the format of Fig. 10 in that Time Adjustment Support includes a plurality of fields and a plurality of Time Adjustments is included, and the other configurations are similar to the format of Fig. 10. Therefore, description of the same parts as those in the format of Fig. 10 will be appropriately omitted, and description will be given focusing on parts different from the format of Fig. 10.

RRH Capabilities of Element in Fig. 16 include Time Adjustment Support and a plurality of Time Adjustments. Time Adjustment Support includes a field in which compatibility information of the schedule processing is set for each schedule processing in which at least one of the start timing and the period can be adjusted.

In the example of Fig. 16, Time Adjustment Support includes a Target Wake Time field in which the compatibility information of the 1-bit TWT processing is set, a Contention Free Period field in which the compatibility information of the 1-bit CFP processing is set, and the like.

In a case where 1 is set in the Target Wake Time field, it indicates that the relay device 12 supports adjustment of at least one of the start timing and the period of the TWT processing, and in a case where 0 is set, it indicates that it does not support the adjustment. The Contention Free Period field is also similar to the Target Wake Time field.

Although not illustrated, Time Adjustment Support also includes a field corresponding to the schedule processing in which at least one of the start timing and the period can be adjusted, other than the TWT processing and the CFP processing. Time Adjustment Support also includes Reserve that is a 1-bit reserved area.

The number of Time Adjustments included in RRH Capabilities is the number of schedule processing for which the relay device 12 supports adjustment of at least one of the start timing and the period. That is, 1 is the number of fields set in Time Adjustment Support. Adjustment information of the schedule processing corresponding to each Time Adjustment is set in each Time Adjustment.

For example, in a case where 1 is set in the Target Wake Time field and the Contention Free Period field, RRH Capabilities include two Time Adjustments. The adjustment information of the TWT processing is set in one of the two Time Adjustments, and the adjustment information of the CFP processing is set in the other.

Time Adjustment may further include information indicating whether an adjustment target is the start timing or the schedule period. Note that the adjustment target may be determined in advance for each schedule processing. The adjustment target may be both the start timing and the schedule period. In this case, Time Adjustment may include information indicating whether the adjustment target is the start timing, the schedule period, or both the start timing and the schedule period.

The wireless terminal device 14 (13) may include a display unit (not illustrated) and display a user interface (UI) representing which of the wireless communication device 11 and the relay device 12 is connected.

### <Example of UI>

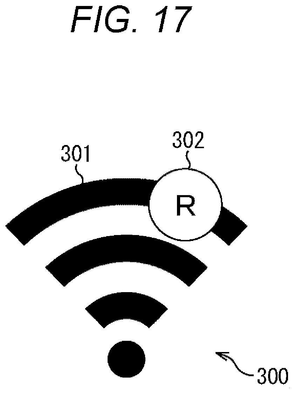

Fig. 17 is a diagram illustrating an example of a UI displayed on the wireless terminal device 14 in this case.

A UI 300 of Fig. 17 is obtained by adding a mark 302 representing the relay device 12 that is an RRH or an AP functioning as an RRH to a mark 301 representing wireless communication, and represents that the wireless terminal device 14 is connected to the relay device 12.

As described above, the wireless terminal device 14 controls the reception of the schedule information and the adjustment information, and executes the schedule processing on the basis of the schedule information and the adjustment information. Therefore, the wireless terminal device 14 can start the schedule processing at the same start timing as the wireless terminal device 13 that directly performs wireless communication with the wireless communication device 11 without passing through the relay device 12, or can end the schedule processing at the same end timing. That is, the wireless terminal device 14 that performs wireless communication via the relay device 12 can appropriately perform the schedule processing according to the schedule designated by the wireless communication device 11.

### <Application examples>

The present technology can be applied to various products. For example, the wireless terminal device 13 (14) may be realized as a mobile terminal such as a smartphone, a tablet personal computer (PC), a notebook PC, a portable game terminal, or a digital camera, a fixed terminal such as a television receiver, a printer, a digital scanner, or a network storage, or a vehicle-mounted terminal such as a car navigation device. Furthermore, the wireless terminal device 13 (14) may be realized as a machine to machine communication (M2M) terminal such as a smart meter, a vending machine, a remote monitoring device, or a point of sale (POS) terminal. Moreover, the wireless terminal device 13 (14) may be a wireless communication module (for example, an integrated circuit module including one die) mounted on these terminals.

On the other hand, for example, the wireless communication device 11 (relay device 12) may be implemented as an AP (wireless base station) of a wireless LAN having a router function or having no router function. Furthermore, the wireless communication device 11 (relay device 12) may be realized as a mobile wireless LAN router. Moreover, the wireless communication device 11 (relay device 12) may be a wireless communication module (for example, an integrated circuit module including one die) mounted on these devices.

### <Configuration example of computer>

The above-described series of processing can be executed by hardware and can also be executed by software. In a case where the series of processing is executed by the software, a program that configures the software is installed in a computer. Here, examples of the computer include a computer incorporated in dedicated hardware, and for example, a general-purpose personal computer that can execute various functions by installing various programs.

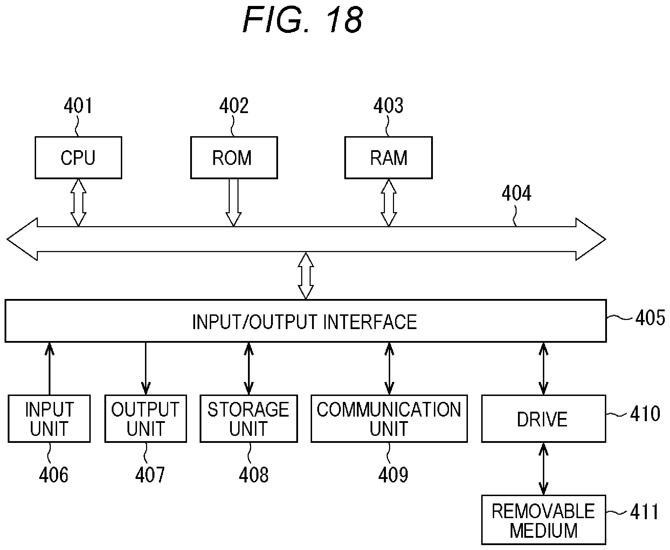

Fig. 18 is a block diagram illustrating a configuration example of hardware of a computer that executes the above-described series of processing by a program.

In the computer, a central processing unit (CPU) 401, a read only memory (ROM) 402, and a random access memory (RAM) 403 are mutually connected by a bus 404.

An input/output interface 405 is further connected to the bus 404. An input unit 406, an output unit 407, a storage unit 408, a communication unit 409, and a drive 410 are connected to the input/output interface 405.

The input unit 406 includes a keyboard, a mouse, a microphone, and the like. The output unit 407 includes a display, a speaker, and the like. The storage unit 408 includes a hard disk, a nonvolatile memory, and the like. The communication unit 409 includes a network interface and the like. The drive 410 drives a removable medium 411 such as a magnetic disk, an optical disk, a magnetooptical disk, a semiconductor memory, or the like.

In the computer configured as described above, for example, the CPU 401 loads a program stored in the storage unit 408 into the RAM 403 via the input/output interface 405 and the bus 404 and executes the program, so that the above-described series of processing is performed.

The program executed by the computer (CPU 401) can be provided by being recorded in the removable medium 411 as a package medium or the like, for example. Furthermore, the program can be provided via a wired or wireless transmission medium such as a local area network, the Internet, or digital satellite broadcasting.

In the computer, the program can be installed in the storage unit 408 via the input/output interface 405 by attaching the removable medium 411 to the drive 410. Furthermore, the program can be received by the communication unit 409 via a wired or wireless transmission medium, and installed in the storage unit 408. In addition, the program can be installed in the ROM 402 or the storage unit 408 in advance.

Note that the program executed by the computer may be a program that performs processing in a time series according to an order described in the present specification, or may be a program that performs processing in parallel or at necessary timing such as when a call is made.

### <Configuration example of smartphone>

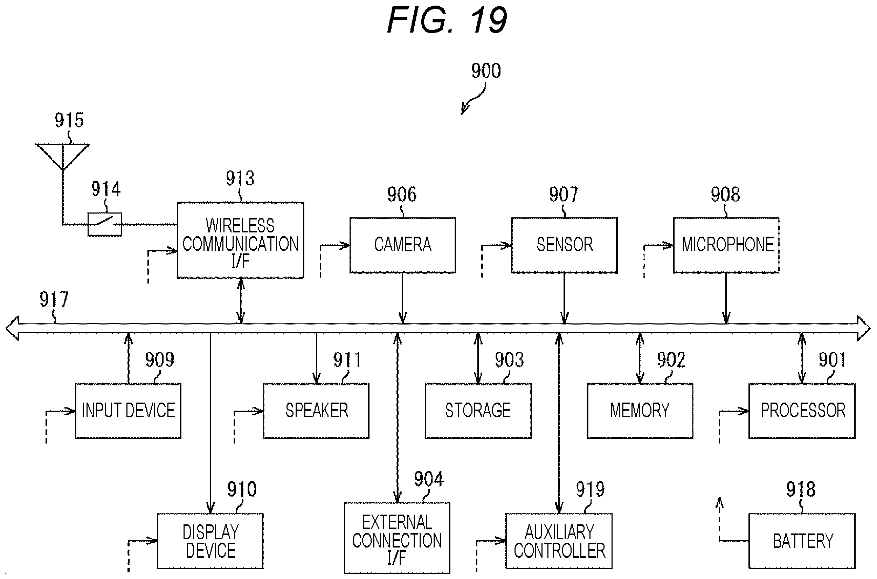

Fig. 19 is a block diagram illustrating a schematic configuration example of the smartphone to which the present technology is applied.

A smartphone 900 includes a processor 901, a memory 902, a storage 903, an external connection interface 904, a camera 906, a sensor 907, a microphone 908, an input device 909, and a display device 910. Furthermore, the smartphone 900 includes a speaker 911, a wireless communication interface 913, an antenna switch 914, an antenna 915, a bus 917, a battery 918, and an auxiliary controller 919.

The processor 901 may be, for example, a CPU or a system on chip (SoC), and restricts functions of an application layer and other layers of the smartphone 900.

The memory 902 includes a RAM and a ROM, and stores a program to be executed by the processor 901, and data.

The storage 903 may include a storage medium such as a semiconductor memory or a hard disk.

The external connection interface 904 is an interface for connecting an external device such as a memory card or a universal serial bus (USB) device to the smartphone 900.

The camera 906 includes an imaging element such as a charge coupled device (CCD) or a complementary metal oxide semiconductor (CMOS), for example, and generates a captured image.

The sensor 907 includes, for example, a sensor group including a positioning sensor, a gyro sensor, a geomagnetic sensor, an acceleration sensor, and the like.

The microphone 908 converts audio input to the smartphone 900 into an audio signal.

The input device 909 includes, for example, a touch sensor that detects a touch on a screen of the display device 910, a keypad, a keyboard, a button, and a switch, and receives an operation by the user or information input from the user.

The display device 910 has a screen such as a liquid crystal display (LCD) or an organic light emitting diode (OLED) display, and converts the audio signal output from the smartphone 900 into audio.

The wireless communication interface 913 supports one or more of wireless LAN standards such as IEEE802.11a, 11b, 11g, 11ac, 11ad, 11ax, 11be and their successor standards, and performs wireless communication.

The wireless communication interface 913 communicates with other devices via the wireless LAN AP in an infrastructure mode. Furthermore, the wireless communication interface 913 directly communicates with other devices in an ad hoc mode or a direct communication mode such as Wi-Fi Direct.

Note that, in Wi-Fi Direct, unlike the ad hoc mode, one of two terminals operates as an AP, but communication is directly performed between the terminals.

The wireless communication interface 913 typically includes a baseband processor, a radio frequency (RF) circuit, and a power amplifier. The wireless communication interface 913 may be a one-chip module in which a memory that stores a communication control program, a processor that executes the program, and related circuits are integrated.

In addition to the wireless LAN scheme, the wireless communication interface 913 may support another type of wireless communication scheme such as a short-range wireless communication scheme, a proximity wireless communication scheme, or a cellular communication scheme.

The antenna switch 914 switches a connection destination of the antenna 915 among a plurality of circuits (for example, circuits for different wireless communication schemes) included in the wireless communication interface 913.

The antenna 915 has a single or a plurality of antenna elements (for example, a plurality of the antenna elements forming a multiple input multiple output (MIMO) antenna), and is used for transmission and reception of a wireless signal by the wireless communication interface 913.

Note that the smartphone 900 is not limited to the example of Fig. 19, and may include a plurality of the antennas (for example, a wireless LAN antenna, an antenna of a proximity wireless communication scheme, and the like). In that case, the antenna switch 914 may be excluded from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 to one another.

The battery 918 supplies power to each block of the smartphone 900 illustrated in Fig. 19 through a feed line partially illustrated by a broken line in Fig. 19. The auxiliary controller 919 causes operation of the minimum necessary functions of the smartphone 900 in a sleep mode, for example.

In the smartphone 900 illustrated in Fig. 19, the control unit 255 in Fig. 4 may be implemented in the wireless communication interface 913. Furthermore, at least some of these functions may be implemented in the processor 901 or the auxiliary controller 919.

Note that the smartphone 900 may operate as a wireless AP (software AP) when the processor 901 executes an AP function at an application level. Furthermore, the wireless communication interface 913 may have the wireless AP function.

Moreover, the smartphone 900 may include a biometric authentication unit (fingerprint authentication, palm-shape authentication, voice authentication, blood vessel authentication, face authentication, iris authentication, and retina authentication). At that time, the wireless communication interface 913 in which the control unit 255 of Fig. 4 is implemented is configured to receive power supply from the same battery 918 as at least one of the display device 910, the speaker 911, and the biometric authentication unit.

Furthermore, in the smartphone 900, information is displayed from at least one of the display device 910 or the speaker 911, on the basis of communication with an external device through the wireless communication interface 913. At that time, a result of synchronization according to the present technology may be output as information from at least one of the display device 910 or the speaker 911.

### <Configuration example of vehicle-mounted device>

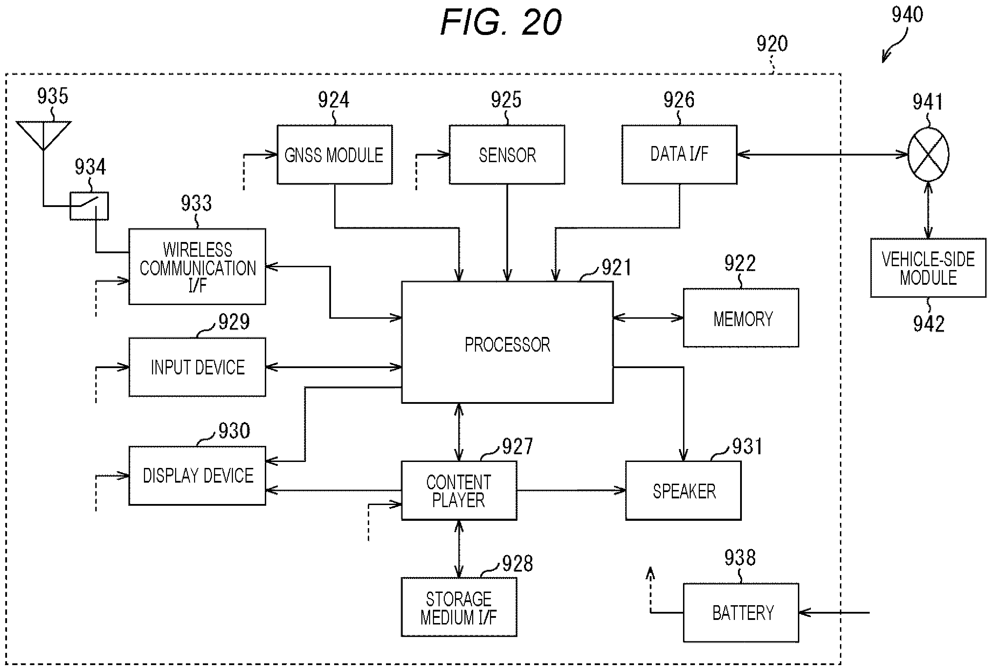

Fig. 20 is a block diagram illustrating a schematic configuration example of a vehicle-mounted device 920 to which the present technology is applied.

The vehicle-mounted device 920 includes a processor 921, a memory 922, a global navigation satellite system (GNSS) module 924, a sensor 925, a data interface 926, a content player 927, and a storage medium interface 928. Furthermore, the vehicle-mounted device 920 includes an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the vehicle-mounted device 920. Furthermore, the processor 921 can also control a drive system of a vehicle, such as a brake, an accelerator, or a steering, on the basis of information obtained through communication based on the present technology.

The memory 922 includes a RAM and a ROM, and stores a program to be executed by the processor 921, and data.

The GNSS module 924 uses a GNSS signal received from a GNSS satellite to measure a location (for example, latitude, longitude, and altitude) of the vehicle-mounted device 920.

The sensor 925 includes, for example, a sensor group including a gyro sensor, a geomagnetic sensor, an air pressure sensor, and the like.

The data interface 926 is connected to a vehicle-mounted network 941 via, for example, a terminal (not illustrated), and acquires data generated on the vehicle side, such as vehicle-mounted data.

The content player 927 reproduces contents stored in a storage medium (for example, a CD or a DVD) inserted into the storage medium interface 928.

The input device 929 includes, for example, a touch sensor that detects a touch on a screen of the display device 930, a button, a switch, or the like, and receives an operation by the user or information input from the user.

The display device 930 has a screen such as an LCD or an OLED display, and displays an image of a navigation function or content to be reproduced.

The speaker 931 outputs sound of the navigation function or the content to be reproduced.

Note that, in the vehicle-mounted device 920, the navigation function and the function of the content player 927 are optional. The navigation function and the content player 927 may be removed from the configuration of the vehicle-mounted device 920.

The wireless communication interface 933 supports one or more of wireless LAN standards such as IEEE802.11a, 11b, 11g, 11n, 11ac, 11ad, 11ax, 11be, and their successor standards, and performs wireless communication. The wireless communication interface 933 communicates with other devices via the wireless LAN AP in the infrastructure mode. Furthermore, the wireless communication interface 933 directly communicates with other devices in the ad hoc mode or the direct communication mode such as Wi-Fi Direct.

The wireless communication interface 933 typically includes a baseband processor, an RF circuit, a power amplifier, and the like. The wireless communication interface 933 may be a one-chip module in which a memory that stores a communication control program, and a processor that executes the program or related circuits are integrated. In addition to the wireless LAN scheme, the wireless communication interface 933 may support another type of wireless communication scheme such as a short-range wireless communication scheme, a proximity wireless communication scheme, or a cellular communication scheme.

The antenna switch 934 switches the connection destination of the antenna 935 among a plurality of circuits included in the wireless communication interface 933.

The antenna 935 has a single or a plurality of antenna elements, and is used for transmission and reception of a wireless signal through the wireless communication interface 933.

Note that the vehicle-mounted device 920 is not limited to the example of Fig. 20, and may include a plurality of the antennas 935. In that case, the antenna switch 934 may be omitted from the configuration of the vehicle-mounted device 920.

The battery 938 may be implemented in the vehicle-mounted device 920 illustrated in Fig. 20 via a power supply line partially indicated by a broken line in the drawing, and the control unit 255 in Fig. 4 may be implemented in the wireless communication interface 933. Furthermore, at least some of these functions may be implemented in the processor 921.

Furthermore, the wireless communication interface 933 may operate as the wireless communication device 11 (relay device 12) described above and provide wireless connection to a terminal possessed by a user in the vehicle.

Furthermore, the present technology may be implemented as a vehicle-mounted system (or vehicle) 940 including one or more blocks of the vehicle-mounted device 920 described above, the vehicle-mounted network 941, and a vehicle-side module 942. The vehicle-side module 942 generates vehicle-side data such as a vehicle speed, an engine speed, or failure information, and outputs the generated data to the vehicle-mounted network 941.

### <Configuration example of wireless AP>

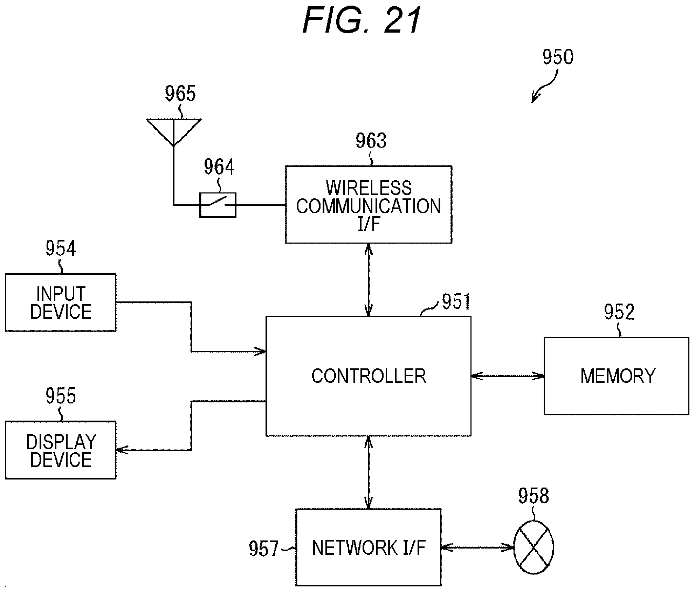

Fig. 21 is a block diagram illustrating a schematic configuration example of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and operates various functions (for example, access restriction, routing, encryption, firewall, log management, and the like) of the Internet protocol (IP) layer and higher layer of the wireless AP 950.

The memory 952 includes a RAM and a ROM, and stores a program to be executed by the controller 951 and various control data (for example, a terminal list, a routing table, an encryption key, a security setting, a log, and the like).

The input device 954 includes buttons and switches, for example, and receives an operation from the user.

The display device 955 includes an LED lamp and the like, and displays an operation status of the wireless AP 950.

The network interface 957 is a wired communication interface for connecting the wireless AP 950 to a wired communication network 958. The network interface 957 may have a plurality of connecting terminals. The wired communication network 958 may be a LAN such as Ethernet (registered trademark), or may be a wide area network (WAN).

The wireless communication interface 963 supports one or more of wireless LAN standards, such as IEEE802.11a, 11b, 11g, 11n, 11ac, 11ad, 11ax, 11be, and their successor standards, and provides wireless connectivity as an AP to nearby terminals.

The wireless communication interface 963 typically includes a baseband processor, an RF circuit, a power amplifier, and the like.

The wireless communication interface 963 may be a one-chip module in which a memory that stores a communication control program, and a processor that executes the program or related circuits are integrated.

The antenna switch 964 switches a connection destination of the antenna 965 among a plurality of circuits included in the wireless communication interface 963, and the antenna 965 has a single or a plurality of antenna elements and is used for transmission and reception of a wireless signal through the wireless communication interface 963.

In the wireless AP 950 illustrated in Fig. 21, the control unit 55 in Fig. 2 (the control unit 155 in Fig. 3) may be implemented in the wireless communication interface 963. Furthermore, at least some of these functions may be implemented in the controller 951.

Note that, the above-described embodiments describe an example for embodying the present technology, and there is a correspondence relationship between the matters in the embodiments and the matters specifying the invention in claims. Similarly, there is a correspondence relationship between the matters specifying the invention in claims and the matters in the embodiments of the present technology having the same names. However, the present technology is not limited to the embodiments, and can be embodied by applying various modifications to the embodiments without departing from the scope of the present technology.

Furthermore, the procedures described in the above-described embodiments may be considered as a method including a series of these procedures, and may be considered as a program for causing this computer to execute the series of procedures and a recording medium that stores the program.

As this recording medium, for example, a compact disc (CD), a mini disc (MD), a digital versatile disc (DVD), a memory card, a Blu-ray (registered trademark) disc, or the like can be used.

Note that, in the present specification, a system means an assembly of a plurality of configuration elements (devices, modules (parts), and the like), and it does not matter whether or not all the configuration elements are located in the same housing. Therefore, a plurality of devices housed in separate housings and connected to each other via a network and one device in which a plurality of modules is housed in one housing are both systems.

Furthermore, the effects described in the present specification are merely examples and are not limited, and effects other than those described in the present specification may be provided.

An embodiment of the present technology is not limited to the embodiment described above, and various modifications can be made without departing from the scope of the present technology.

For example, the present technology may be embodied as cloud computing in which one function is shared by a plurality of devices via a network and is processed in cooperation.

Furthermore, each step described in the flowchart described above can be performed by one device or can be shared and performed by a plurality of devices.

Moreover, in a case where a plurality of pieces of processing is included in one step, the plurality of pieces of processing included in the one step can be executed by one device or executed by a plurality of devices in a shared manner.

The present technology can have the following configurations.
(1) A wireless control device including
   a control unit that controls wireless communication with a wireless communication device via a relay device, the control unit controlling reception of schedule information indicating a schedule designated by the wireless communication device and adjustment information used for adjustment of the schedule, and executing schedule processing on the basis of the schedule information and the adjustment information.
(2) The wireless control device according to (1) described above, in which
   the schedule information includes information regarding at least one of a start timing, an end timing, and a period of the schedule, and
   the control unit is configured to adjust at least one of the start timing, the end timing, and the period of the schedule on the basis of the adjustment information.
(3) The wireless control device according to (2) described above, in which
   the control unit is configured to, on the basis of the schedule information and the adjustment information, adjust the start timing to be same as a start timing of the schedule of the wireless control device that has directly received the schedule information from the wireless communication device.
(4) The wireless control device according to (2) described above, in which
   the control unit is configured to, on the basis of the schedule information and the adjustment information, adjust the end timing to be same as an end timing of the schedule of the wireless control device that has directly received the schedule information from the wireless communication device.
(5) The wireless control device according to any one of (1) to (4) described above, in which
   the relay device is configured to perform wireless communication in which a reference function of data in a frame is limited.
(6) The wireless control device according to any one of (1) to (5) described above, in which
   the adjustment information includes information representing a difference between a timing at which the relay device receives the schedule information from the wireless communication device and a timing at which the wireless control device receives the schedule information via the relay device.
(7) The wireless control device according to (6) described above, in which
   the schedule information is transmitted from the wireless communication device via the relay device, and
   the adjustment information is generated and transmitted by the relay device.
(8) The wireless control device according to (7) described above, in which
   the adjustment information is transmitted from the relay device to the wireless communication device, and is transmitted together with the schedule information from the wireless communication device to the wireless control device via the relay device.
(9) The wireless control device according to any one of (1) to (8) described above, in which
   the schedule information and the adjustment information are included in a frame transmitted from the relay device.
(10) The wireless control device of (9) described above, in which
   the frame includes a Beacon frame.
(11) The wireless control device according to (9) or (10) described above, in which
   the frame includes the adjustment information and the schedule information corresponding to one wireless control device as information addressed to the one wireless control device.
(12) The wireless control device according to (9) or (10) described above, in which
   the frame includes the adjustment information and the schedule information corresponding to each of one or more of the wireless control devices as information addressed to a broadcast.
(13) The wireless control device according to any one of (9) to (12) described above, in which
   the frame also includes adjustment information presence/absence information indicating whether or not the frame includes the adjustment information.
(14) The wireless control device according to any one of (9) to (13) described above, in which
   the frame includes the schedule information and the adjustment information of each of a plurality of the schedule processing, and
   the control unit is configured to execute each of the plurality of schedule processing on the basis of the schedule information and the adjustment information of the schedule processing.
(15) The wireless control device according to any one of (1) to (14) described above, in which
   the schedule processing includes Target Wake Time processing or Contention Free Period processing.
(16) The wireless control device according to (15) described above, in which
   the control unit is configured to, on the basis of the schedule information and the adjustment information, start the Target Wake Time processing at an end timing of wireless communication directly performed by another wireless control device with the wireless communication device without passing through the relay device by the Target Wake Time processing.
(17) A wireless control method including
   a control step of, by a wireless control device, controlling wireless communication with a wireless communication device via a relay device, the control step including controlling reception of schedule information indicating a schedule designated by the wireless communication device and adjustment information used for adjustment of the schedule, and executing schedule processing on the basis of the schedule information and the adjustment information.
(18) A program for causing a computer to function as
   a control unit that controls wireless communication with a wireless communication device via a relay device, the control unit controlling reception of schedule information indicating a schedule designated by the wireless communication device and adjustment information used for adjustment of the schedule, and executing schedule processing on the basis of the schedule information and the adjustment information.
(19) A wireless communication device including
   a control unit that controls reception of compatibility information indicating that adjustment of a schedule is supported, the compatibility information being transmitted from a relay device that relays wireless communication with a wireless control device.
(20) The wireless communication device according to (19) described above, in which
   the relay device is configured to perform wireless communication in which a reference function of data in a frame is limited.
(21) The wireless communication device according to (19) or (20) described above, in which
   the control unit is configured to also control reception of adjustment information used for adjustment of the schedule, the adjustment information being transmitted from the relay device.
(22) The wireless communication device according to (21) described above, in which
   the control unit is configured to cause the received adjustment information to be transmitted to the wireless control device via the relay device together with schedule information indicating the schedule.
(23) The wireless communication device according to (22) described above, in which
   the adjustment information includes information representing a difference between a timing at which the relay device receives the schedule information from the wireless communication device and a timing at which the wireless control device receives the schedule information via the relay device.
(24) The wireless communication device of (22) or (23) described above, in which
   the control unit is configured to cause the adjustment information and the schedule information to be included in a frame and to be transmitted.
(25) The wireless communication device of (24) described above, in which
   the frame includes a Beacon frame.
(26) The wireless communication device according to (19) or (20) described above, in which
   the control unit is configured to control reception of the compatibility information of each of a plurality of the schedules.
(27) The wireless communication device according to (26) described above, in which
   the control unit is configured to also control reception of adjustment information used for adjustment of each of the plurality of schedules, the adjustment information being transmitted from the relay device.
(28) The wireless communication device according to (27) described above, in which
   the control unit causes the received adjustment information of each of the plurality of schedules to be transmitted to the wireless control device via the relay device together with schedule information indicating each of the plurality of schedules.
(29) The wireless communication device according to any one of (19) to (28) described above, in which
   the schedule includes a schedule of Target Wake Time processing or Contention Free Period processing.
(30) A wireless control method including
   a control step of, by a wireless communication device, controlling reception of compatibility information indicating that adjustment of a schedule is supported, the compatibility information being transmitted from a relay device that relays wireless communication with a wireless control device.
(31) A program for causing a computer to function as
   a control unit that controls reception of compatibility information indicating that adjustment of a schedule is supported, the compatibility information being transmitted from a relay device that relays wireless communication with a wireless control device.
(32) A relay device including
   a control unit that controls transmission to a wireless control device of schedule information indicating a schedule designated by a wireless communication device and adjustment information used for adjustment of the schedule.
(33) The relay device according to (32) described above, in which
   the control unit is configured to generate the adjustment information.
(34) The relay device according to (32) or (33) described above, in which
   the control unit is configured to cause the wireless communication device to transmit compatibility information indicating that adjustment of the schedule is supported and the adjustment information.
(35) The relay device according to (32) or (33) described above, in which
   the control unit is configured to cause the wireless communication device to transmit information indicating that the wireless communication device has a function of performing wireless communication in which a reference function of data in a frame is limited, and the adjustment information.
(36) The relay device according to any one of (32) to (35) described above, in which
   the adjustment information includes information representing a difference between a timing at which the relay device receives the schedule information from the wireless communication device and a timing at which the wireless control device receives the schedule information via the relay device.
(37) The relay device according to any one of (32) to (36) described above, in which
   the control unit is configured to control reception of the schedule information transmitted from the wireless communication device.
(38) The relay device according to any one of (32) to (37) described above, in which
   the control unit is configured to include the schedule information and the adjustment information in a frame and transmit the schedule information and the adjustment information.
(39) The relay device according to (38) described above, in which
   the frame includes a Beacon frame.
(40) The relay device according to (38) or (39) described above, in which
   the control unit is configured to include in the frame the adjustment information and the schedule information corresponding to one wireless control device as information addressed to the one wireless control device and transmit the adjustment information and the schedule information.
(41) The relay device according to (38) or (39) described above, in which
   the control unit is configured to include in the frame the adjustment information and the schedule information corresponding to each of one or more of the wireless control devices as information addressed to a broadcast and transmit the adjustment information and the schedule information.
(42) The relay device according to any one of (38) to (41) described above, in which
   the control unit is configured to also include in the frame adjustment information presence/absence information indicating whether or not the frame includes the adjustment information and transmit the adjustment information presence/absence information.
(43) The relay device according to any one of (38) to (42) described above, in which
   the control unit is configured to include the schedule information and the adjustment information of each of a plurality of the schedules in the frame and transmit the schedule information and the adjustment information.
(44) The relay device according to any one of (32) to (43) described above, in which
   the schedule includes a schedule of Target Wake Time processing or Contention Free Period processing.
(45) A wireless control method including
   a control step of, by a relay device, controlling transmission to a wireless control device of schedule information indicating a schedule designated by a wireless communication device and adjustment information used for adjustment of the schedule.
(46) A program for causing a computer to function as
   a control unit that controls transmission to a wireless control device of schedule information indicating a schedule designated by a wireless communication device and adjustment information used for adjustment of the schedule.

### REFERENCE SIGNS LIST

- 11: Wireless communication device
- 12: Relay device
- 14: Wireless terminal device
- 55, 155, 255: Control unit

## Claims

1. A wireless control device comprising
a control unit that controls wireless communication with a wireless communication device via a relay device, the control unit controlling reception of schedule information indicating a schedule designated by the wireless communication device and adjustment information used for adjustment of the schedule, and executing schedule processing on a basis of the schedule information and the adjustment information.

2. The wireless control device according to claim 1, wherein
the schedule information includes information regarding at least one of a start timing, an end timing, and a period of the schedule, and
the control unit is configured to adjust at least one of the start timing, the end timing, and the period of the schedule on a basis of the adjustment information.

3. The wireless control device according to claim 2, wherein
the control unit is configured to, on a basis of the schedule information and the adjustment information, adjust the start timing to be same as a start timing of the schedule of the wireless control device that has directly received the schedule information from the wireless communication device.

4. The wireless control device according to claim 2, wherein
the control unit is configured to, on a basis of the schedule information and the adjustment information, adjust the end timing to be same as an end timing of the schedule of the wireless control device that has directly received the schedule information from the wireless communication device.

5. The wireless control device according to claim 1, wherein
the relay device is configured to perform wireless communication in which a reference function of data in a frame is limited.

6. The wireless control device according to claim 1, wherein
the adjustment information includes information representing a difference between a timing at which the relay device receives the schedule information from the wireless communication device and a timing at which the wireless control device receives the schedule information via the relay device.

7. The wireless control device according to claim 6, wherein
the schedule information is transmitted from the wireless communication device via the relay device, and
the adjustment information is generated and transmitted by the relay device.

8. The wireless control device according to claim 7, wherein
the adjustment information is transmitted from the relay device to the wireless communication device, and is transmitted together with the schedule information from the wireless communication device to the wireless control device via the relay device.

9. The wireless control device according to claim 1, wherein
the schedule information and the adjustment information are included in a frame transmitted from the relay device.

10. The wireless control device according to claim 9, wherein
the frame includes a Beacon frame.

11. The wireless control device according to claim 9, wherein
the frame includes the adjustment information and the schedule information corresponding to one wireless control device as information addressed to the one wireless control device.

12. The wireless control device according to claim 9, wherein
the frame includes the adjustment information and the schedule information corresponding to each of one or more of the wireless control devices as information addressed to a broadcast.

13. The wireless control device according to claim 9, wherein
the frame also includes adjustment information presence/absence information indicating whether or not the frame includes the adjustment information.

14. The wireless control device according to claim 9, wherein
the frame includes the schedule information and the adjustment information of each of a plurality of the schedule processing, and
the control unit is configured to execute each of the plurality of schedule processing on a basis of the schedule information and the adjustment information of the schedule processing.

15. The wireless control device according to claim 1, wherein
the schedule processing includes Target Wake Time processing or Contention Free Period processing.

16. The wireless control device according to claim 15, wherein
the control unit is configured to, on a basis of the schedule information and the adjustment information, start the Target Wake Time processing at an end timing of wireless communication directly performed by another wireless control device with the wireless communication device without passing through the relay device by the Target Wake Time processing.

17. A wireless control method comprising
a control step of, by a wireless control device, controlling wireless communication with a wireless communication device via a relay device, the control step including controlling reception of schedule information indicating a schedule designated by the wireless communication device and adjustment information used for adjustment of the schedule, and executing schedule processing on a basis of the schedule information and the adjustment information.

18. A program for causing a computer to function as
a control unit that controls wireless communication with a wireless communication device via a relay device, the control unit controlling reception of schedule information indicating a schedule designated by the wireless communication device and adjustment information used for adjustment of the schedule, and executing schedule processing on a basis of the schedule information and the adjustment information.
